# EUROPEAN PATENT SPECIFICATION

(11) **EP 1 800 877 B1**
(45) Date of publication and mention of the grant of the patent: **30.09.2009**
(21) Application number: 06256413.3
(22) Date of filing: 18.12.2006
(51) Int. Cl.: B41J 11/48, B41J 13/10

(54) **Printing apparatus and printing method**
Druckvorrichtung und Druckverfahren
Dispositif d'impression et procédé d'impression

(30) Priority: 26.12.2005 JP 2005372525
(43) Date of publication of application: 27.06.2007
(73) Proprietor: CANON KABUSHIKI KAISHA, Tokyo (JP)
(72) Inventor: Mima, Tsuyoshi, Canon Kabushiki Kaisha, Tokyo (JP); Negishi, Akira, Canon Kabushiki Kaisha, Tokyo (JP)
(74) Representative: Hitching, Peter Matthew

(56) References cited:
- JP-A- 7 001 797

## Description

### BACKGROUND OF THE INVENTION

### Field of the Invention

The present invention relates to a printing apparatus and a printing method.

### Description of the Related Art

Printers for performing printing on multiple sheets having different sheet attributes such as size, type (material), and so forth are known. With such a printer, a plurality of sheet loading units are provided for each set of sheet attributes, and a sheet loading unit to be employed for a print job is appropriately selected from the plurality of sheet loading units at the time of printing.

However, the number of sheet loading units which can be provided in a printing apparatus is restricted. Accordingly, it is not practically possible to load sheets having all of the possible attribute sets in the sheet loading units of one printing apparatus. Consequently, methods have been proposed wherein sheets having various sheet attributes are subjected to printing processing by effectively employing the limited number of sheet loading units.

For example, the printing apparatus according to Japanese Patent No. 3158789(corresponds to JP 07 001797 A) performs the following operation in the event that sheets to be employed for the print job thereof are not loaded in any of the sheet loading units when a new print job is input. This is an operation for instructing an operator to change the sheets in the sheet loading unit not to be employed for any of the print jobs (hereafter, unemployed tray) existing within a print queue, with sheets necessary for the new print job.

### SUMMARY OF THE INVENTION

The present invention, which has been made in light of the above point, is for providing an improved printing apparatus and printing method.

According to a first aspect of the present invention, there is provided a printing apparatus as specified in claims 1 to 13.

According to a second aspect of the present invention, there is provided a printing method as specified in claim 14.

Further features of the present invention will become apparent from the following description of exemplary embodiments with reference to the attached drawings.

### BRIEF DESCRIPTION OF THE DRAWINGS

The accompanying drawings, which are incorporated in and constitute a part of the specification, illustrate numerous embodiments, features and aspects of the invention and together with the description, serve to explain the principles of the invention.

Fig. 1 is a diagram illustrating a printing processing system.

Fig. 2 is a diagram illustrating a library of sheet information.

Fig. 3 is a block diagram illustrating the configuration of an MFP.

Fig. 4 is a cross-sectional view illustrating the configuration of the MFP of Fig. 3.

Fig. 5 is a diagram illustrating the setting screen of a printer driver which runs on a client PC 109.

Fig. 6 is a diagram illustrating the screen to be displayed when a property button 505 is depressed at the setting screen of the printer driver.

Fig. 7 is a diagram illustrating the screen to be displayed when a finishing tab 608 is selected at the setting screen of the printer driver in Fig. 6.

Fig. 8 is a diagram illustrating the screen to be displayed when a paper feeding tab 609 is selected at the setting screen of the printer driver in Fig. 6.

Fig. 9 is a diagram illustrating the screen to be displayed when the finishing tab 608 is selected at the property setting screen of the printer driver in Fig. 6.

Fig. 10 is a diagram illustrating the data structure of a print job which the client PC 109 transmits to an MFP 110.

Fig. 11 is a flowchart illustrating reception processing which the MFP 110 executes in the event of receiving a print job from an external device via an external interface 202.

Fig. 12 is a diagram illustrating one example of a print queue to be stored in an HDD 209.

Fig. 13 is a diagram illustrating the screen to be displayed on an operating unit 204 of the MFP 110 in step S116.

Fig. 14 is a diagram illustrating the screen to be displayed on the operating unit 204 of the MFP 110 in step S117.

Fig. 15 is a flowchart illustrating printing processing to be executed based on print jobs accumulated in the print queue.

Fig. 16 is a diagram illustrating the screen to be output to an operator of the MFP 110 via the operating unit 204.

Fig. 17 is a flowchart illustrating reception processing which the MFP 110 executes in the event of receiving a print job from an external device via the external interface 202.

Fig. 18 is a diagram illustrating the display screen of the operating unit 204 for accepting a paper-feed-tray selecting instruction beforehand.

Fig. 19 is a flowchart illustrating reception processing which the MFP 110 executes in the event of receiving a print job from an external device via the external interface 202.

Fig. 20 is a diagram illustrating the display screen for storing sheet attribute information in the HDD 209.

Fig. 21 is a diagram illustrating the display screen for setting a sheet type.

Fig. 22 is a diagram illustrating the display screen for setting a sheet size.

Fig. 23 is a diagram illustrating the screen to be displayed when the paper feeding tab 608 is selected in the setting screen of the printer driver in Fig. 6.

Fig. 24 is a diagram illustrating the screen to be displayed when a "MIXTURE OF SHEET TYPES..." button 2301 is selected at a paper feed setting screen of the printer driver in Fig. 23.

Fig. 25 is a diagram illustrating a job example of which sheet type differs for most pages.

Fig. 26 is a flowchart illustrating display processing of a sheet change instruction.

Fig. 27 is a diagram illustrating the screen to be displayed on the operating unit 204 of the MFP 110 in step S2604 in Fig. 26.

Fig. 28 is a diagram illustrating the screen to be displayed on the operating unit 204 of the MFP 110 in step S2604 in Fig. 26.

Fig. 29 is a diagram illustrating the screen to be displayed on the operating unit 204 of the MFP 110 in step S117.

### DESCRIPTION OF THE EMBODIMENTS

The present invention will now be described in detail with reference to the drawings showing various embodiments thereof. In the drawings, elements and parts which are identical throughout the views are designated by the same reference numeral, and duplicate description thereof is omitted.

### First exemplary embodiment

### Configuration of an overall system

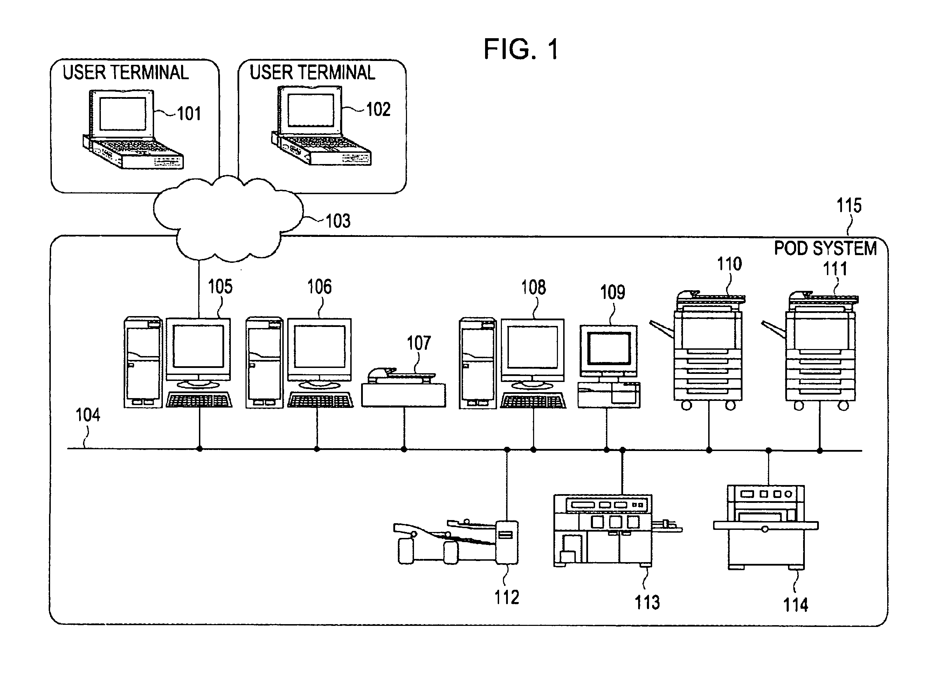

Fig. 1 is a diagram illustrating a printing processing system according to a first exemplary embodiment of the present invention. The printing system illustrated in Fig. 1 comprises one or more user terminals (user terminal 101 and user terminal 102 in the present exemplary embodiment), and a POD (Print On Demand) system 115 connected via the Internet 103 to said user terminals.

An ordering party for submitting the order of a print service to the POD system 115 can submit the order of a print service using the user terminal 101 or user terminal 102.

An order-receiving server 105 is a server which receives a print service order from a user terminal via the Internet 103, and which receives print job data as a print service from a user terminal. Here, the print job data is data for bringing together multiple page data created by particular application software at a user terminal as a series of print jobs. The print job data is the data, which is created by the application software which operates at a user terminal, to which setting information (e.g. a job ticket) is appended, indicating in what form the POD system is to output the data. Here, the output form indicates, for example, the type of book binding, color mode, and sheet type. The print job data which the order-receiving server 105 received from the user terminal 101 or 102 is managed with an ID number which the order-receiving server 105 issues. This order-receiving server 105 includes a Web server function, and includes a function for transmitting via the internet 103 display data to be displayed at a Web browser which runs on the user terminal 101 and user terminal 102.

A file server 106 is a server for storing and managing the print job data received by the order-receiving server 105 via the Internet 103. Also, the file server 106 stores library information of sheets (media) which can be used by a digital multi function peripheral (MFP) 110/111.

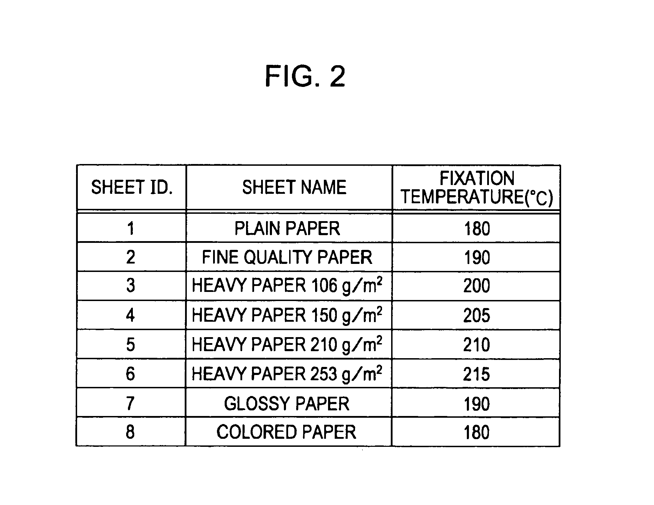

Here, the library information of sheets is information such as illustrated in a table in Fig. 2, for example. The library information in Fig. 2 is information wherein eight types of sheets are converted into a table, but may be information wherein many more types (e.g., several hundred types) of sheets are converted into a table. Each of the eight sheet types is appended with a corresponding unique sheet ID, and accordingly, the type of sheets can be determined by determining the sheet ID. Note that the file server 106 can transmit the library information to the MFP 110 or MFP 111. The MFP 110 or MFP 111 which received the library information performs various types of settings for operating the device based on the library information. Fixation temperature is determined for each sheet in Fig. 2. Here, fixation temperature indicates temperature at the time of subjecting a toner image to heat fixing using a later-described fixing apparatus 608, and the temperatures in Fig. 2 are fixation temperatures set depending on the type of sheet. Thus, the MFP 110 and MFP 111 can subject sheets to fixation processing at appropriate fixation temperature depending on the type of sheets based on the library information. Note that Fig. 2 shows fixation temperature as information being associated with sheets, but information other than fixation temperature may be appended. For example, information such as a transfer voltage or the like to be applied to a transfer drum 605 may be appended.

A print server 108 is a server for storing image data read by a scanner 107 or a scan device for reading the originals of the MFP 110, MFP 111, or the like. Also, the print server 108 executes correction of read image data (for example, correction of a deviation in the reading direction, elimination of noise (black points)). Also, the print server 108 combines a plurality of print job data stored in the file server 106 and image data read by the scanner 107 or the like.

The print server 108, client PC 109, scanner 107, MFP 110, and MFP 111 are connected by a network 104 such as a LAN, or the like. Data can be transferred, and a control command can be transmitted/received between the respective devices.

Also, with the printing processing system illustrated in Fig. 1, a paper folding device 112 includes a function for folding multiple sheets output by the MFP 110 or MFP 111.

Also, a case binding device 113 includes a function for binding multiple sheets to be subjected to book binding by pasting a sheet serving as a cover thereto.

Further, a sheet trimming device 114 trims the bound books made up of the multiple sheets with a cover being pasted thereto by the case binding device 113.

### Configuration of MFP

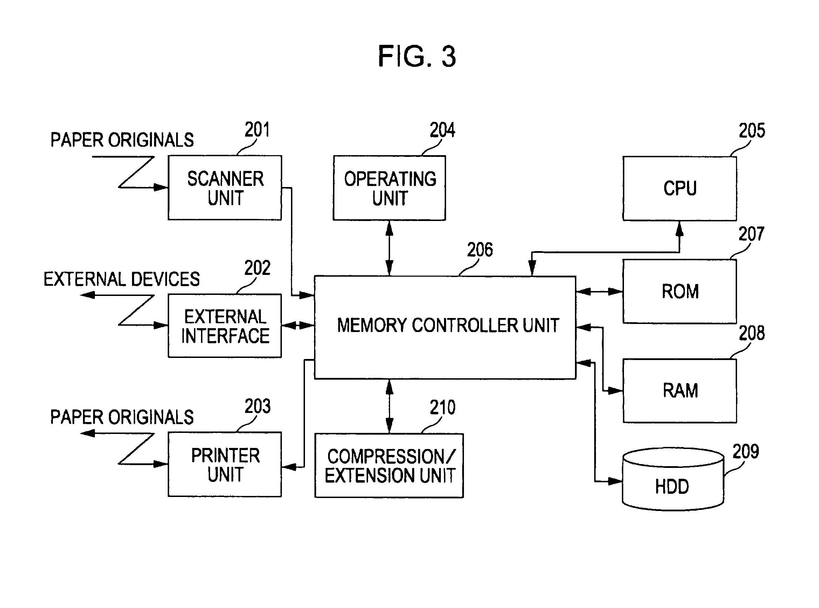

Next, the MFP (Multi Function Peripheral) will be described. Fig. 3 is a block diagram illustrating the configuration of the MFPs 110 and 111. The MFPs 110 and 111 according to the present exemplary embodiment include memory such as a hard disk 209 or the like which can store multiple job data. Also, the MFPs 110 and 111 include a copy function for storing the job data input from a scanner unit 201 in the hard disk 209 or the like, and then printing this at a printer unit 203. Also, the MFPs 110 and 111 include a print function for storing the job data input via an external interface 202 in the hard disk 209 or the like, and then printing this at the printer unit 203.

As illustrated in Fig. 3, the MFP according to the present exemplary embodiment includes the scanner unit 201 for reading the images of paper originals, and also subjecting the read image data to image processing. Also, the MFPs include the external interface 202 for transmitting/receiving image data or the like as to an external device, and the printer unit 203 for forming an image on sheets based on the job data stored in the hard disk 209 or the like.

Also, the MFPs further include an operating unit 204, with which a user can select various processing functions of the MFP, and give various types of instructions.

The MFPs include a CPU 205, which operates based on a program read in ROM 207. Also, the ROM 207 of the MFPs stores a program for interpreting the PDL (Page Description Language) code data which the external interface 202 received from an external device (e.g., client PC 109). Also, the ROM 207 stores a program for executing an operation for rendering the code data into raster image data. The CPU 205 executes those programs.

The memory controller unit 206 of the MFPs controls access to the ROM 207, RAM 208, and hard disk 209.

The ROM 207 is read only memory, and stores a program for initializing various types of functions of the MFPs, font information, and so forth. Also, the RAM 208 is readable and writable memory, and stores the image data, various types of programs, and setting information, which is transmitted from the scanner unit 201 or external interface 202 via the memory controller unit 206. Further, the hard disk 209 is a large-capacity storage device for storing the image data compressed by a compression/extension unit 210.

The compression/extension unit 210 subjects the image data or the like stored in the RAM 208 and hard disk 209 to compression/extension using various types of compression method such as JBIG, JPEG, or the like.

### Configuration of MFP

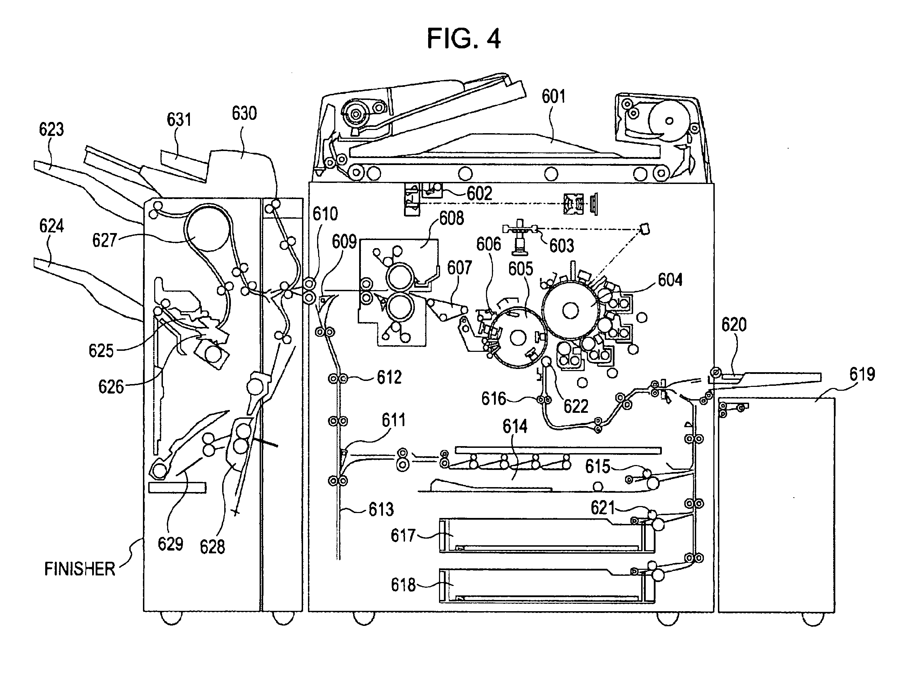

Fig. 4 is a cross-sectional view illustrating the configuration of the MFPs. In Fig. 4, an automatic document feeder (ADF) 601 sequentially separates an original sheet bundle set on the loading face of an original tray one by one. Subsequently, the ADF 601 conveys each sheet from the original sheet bundle onto an original table glass to scan the originals using a scanner 602. The scanner 602 reads the image of the original document conveyed on the original table glass, and converts this into image data using a CCD. A rotary polygon mirror (polygon mirror or the like) 603 causes light rays, which are modulated depending on the converted image data, such as laser light or the like, to enter and impinge upon a photosensitive drum 604 via a reflection mirror as reflection scan light.

A latent image formed by the laser light which impinges upon the photosensitive drum 604 as reflection scan light is developed with toner, and the toner image is transferred to a sheet member adhered on a transfer drum 605. An image is formed by subjecting each toner color (yellow (Y), magenta (M), cyan (C), and black (K)) to the above series of image formation processes.

Subsequently, following the four image formation processes, the sheet 605 on which an image is formed is separated from the transfer drum 605 by a separating pawl 606, and is conveyed to a fixing apparatus 608 by a prefixing conveyance unit 607. The fixing apparatus 608 is made up of a combination of rollers and a belt, and has a built-in heat source such as a halogen heater or the like, whereby the toner on the sheet member to which the toner image has been transferred is fixed, using heat and pressure.

A discharge flapper 609 is configured so as to swing on a swing shaft, and to stipulate the conveyance direction of sheets. For example, when the discharge flapper 609 swings in the clockwise direction, sheets are conveyed straight, and are discharged externally by discharge rollers 610. On the other hand, when forming images on both sides of the sheets, the discharge flapper 609 swings in the counterclockwise direction in the drawing, and the sheets are conveyed downwards to a conveyance unit for two-sided printing.

The conveyance unit for two-sided printing comprises a reversing flapper 611, reversing rollers 612, a reversing guide 613, and a two-sided tray 614. The reversing flapper 611 is configured so as to swing centered on a swing shaft, and stipulates the conveyance direction of sheets. First, the reversing flapper 611 swings in the counterclockwise direction, so that sheets are conveyed to the reversing guide 613 by the reversing rollers 612. The reversing rollers 612 temporarily stops in a state in which the trailing edge of a sheet is nipped by the reversing rollers 612, and subsequently, the reversing flapper 611 swings in the clockwise direction. Further, the reversing rollers 612 rotate in the reverse direction, the sheet is switched back and conveyed, and is guided into the bothsided tray 614 in a state of the trailing edge and leading edge thereof being counterchanged.

With the two-sided tray 614, the sheet is loaded therein, following which the sheet is conveyed to registration rollers 616 by a paper refeed roller 615. At this time, the sheet is conveyed in a state in which the face opposite of the first face at the transfer process faces the photosensitive drum. Subsequently, the image of the second face is formed in the same way as the above processes, and consequently, the images of both sides of the sheet are formed, and the sheet is discharged externally through a fixing process.

A paper feed conveyance unit comprises sheet cassettes A617 and B618, a paper deck 619, a hand feed tray 620, a paper feed roller 621, and registration rollers 616.

Sheets having various types of size and various types of material are stored in the sheet cassettes A617 and B618, and the paper deck 619, and various types of recording medium including a film member such as OHP sheets or the like are loaded in the hand feed tray 620. Each of the sheet cassette A617, sheet cassette B618, paper deck 619, and hand feed tray 620 is provided with a paper feed roller 621, whereby sheets are supplied one at a time. Specifically, the loaded sheets are sequentially brought up by a pickup roller, overlapping conveyance is prevented by a separation roller provided facing the paper feed roller 621, whereby the sheets are conveyed one by one to conveyance guides.

Driving force for rotating in the opposite direction of the conveyance direction is applied to the separation roller via a torque limiter (not shown). When only one sheet enters a nip portion formed between the separation roller and the paper feed roller 621, the separation roller is driven with the sheet, and rotates in the conveyance direction. On the other hand, in the event of overlapping conveyance occurring, the separation roller rotates in the opposite direction of the conveyance direction, whereby the overlapped sheets are returned, and only the top sheet is fed out.

The brought-up sheet is guided to between the conveyance guides, and is conveyed to the registration rollers 616 by multiple conveyance rollers. At this time, the registration rollers 616 are stopped, the leading edge of the sheet runs into the nip portion formed by the registration roller pair (616), and the sheet forms a loop, whereby skewing thereof is corrected. Subsequently, the registration rollers 616 start rotating in sync with the timing of a toner image to be formed on the photosensitive drum 604 in the image formation unit to convey the sheet.

The sheet conveyed by the registration rollers 616 is electrostatically attracted to a transfer drum 605 surface by an absorption roller 622.

The sheet discharged from the fixing unit of the printer unit enters an online finisher unit (in the case of a finisher being connected). The online finisher unit includes a sample tray 623 and a stack tray 624, and sheets are discharged by switching between the trays depending on the type of job and the number of sheets to be discharged.

There are two sorting methods, which are a bin sorting method, which includes multiple bins, for distributing output sheets to the respective bins, and a shift sorting method, which includes an electronic sorting function, for distributing output sheets for each job by shifting bins (or trays) in the back-to-forth direction, whereby sorting can be performed. The electronic sorting function is referred to as collating, and as long as the core unit has a large capacity memory, the page sequence and discharge sequence which are buffered are modified using the buffer memory, i.e., employing a so-called collating function enables the function of electronic sorting to be handled. Next, while sorting is to distribute output sheets for each job, a group function is a function for sorting output sheets for each page.

Further, in the event that a staple mode is set, control is performed so as to discharge output sheets in the stack tray 624. At this time, prior to discharging sheets in the stack tray 624, the sheets are sequentially stacked in a processing tray 625 within the finisher for each job. Subsequently, the sheets are bound on the processing tray 625 by a stapler 626, following which the sheet bundle is discharged in the stack tray 624.

Additionally, there is a puncher 627 for providing two (or more) perforations for filing until sheets reach the above two trays, which performs punch processing depending on the type of a job. For example, in the event of the punch processing being set via the operating unit by a user, the following operation is performed. This is an operation wherein the recording sheets are subjected to punch processing by the puncher 627, following which they are passed through the device to be discharged in a discharge tray such as the stack tray 624 or sample tray 623.

Further, a saddle stitcher 628 performs processing (bookbinding processing) wherein the sheets are subjected to center folding by being nipped in rollers to create a booklet such as a brochure. The sheets bound by the saddle stitcher 628 are discharged in a booklet tray 629. Note that whether or not a sheet processing operation such as bookbinding processing or the like by the saddle stitcher 628 can be executed depends on the sheet processing settings set by the user as to a job to be output, such as described above.

Also, an inserter 630 is provided for conveying the sheets set in an insertion tray 631 to any of the stack tray 624, the sample tray 623, and the like without passing through the printer. Thus, the sheets set in the inserter 630 can be inserted (interleaved) between the sheets (sheets printed at the printer unit) to be conveyed to the online finisher unit. Let us say that the sheets set in the insertion tray 631 of the inserter 630 in a face-up state, and the sheets are sequentially fed from the top sheet.

Therefore, the sheet from the inserter 630 is conveyed to the stack tray 624 or sample tray 623 as it is, and thus is discharged in a face-down state. When conveying the sheet from the inserter 630 to the saddle stitcher 628, the sheet is first conveyed to the puncher side, and then is switched back to be conveyed to the saddle stitcher 628, thereby aligning the orientations of the faces of the sheets. Note that whether or not a sheet processing operation such as sheet-insertion processing or the like by the inserter 630 can be executed depends on the sheet processing settings set by the user as to a job to be output, such as described above.

### Transmission processing of print jobs

Next, description will be made regarding processing for the operator of the POD system 115 transmitting a print job from the client PC 109 to the MFP 110 or MFP 111 in accordance with the content of the order received at the order-receiving server 105 from the client PC 109.

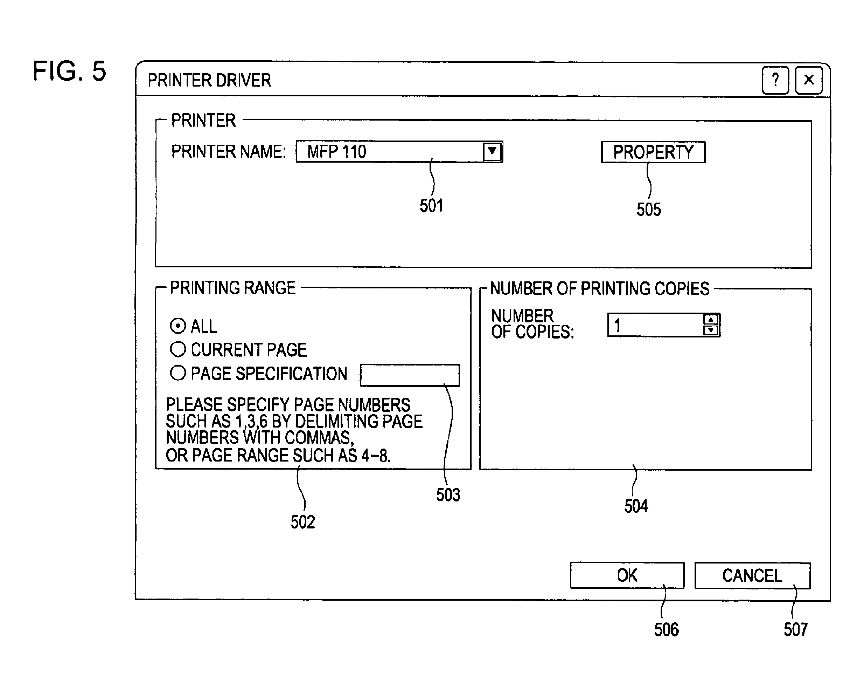

Fig. 5 is a diagram illustrating the setting screen of a printer driver which runs on the client, the client PC 109 displays the setting screen in Fig. 5 on the display screen by activating a printer driver. Here, the printer driver is a device driver for controlling the MFP 110 or MFP 111, and is software running on the client PC 109. The client PC 109 generates a print job to be transmitted to the MFP 110 or MFP 111 by activating the printer driver.

In the setting screen in Fig. 5, a user activates a printer name selection box 501 using a pointing device (not shown). According to this operation, either of the MFP 110 or MFP 111 is selected as a transmission destination to which the client PC 109 transmits a print job. In Fig. 5, the client PC 109 selects the MFP 110. The user then operates a print range selection box 502 using a pointing device or the like. Thus, the desired page range to be printed is determined by an application at the MFP 110. In the event of the user selecting "ALL", the printer driver regards all of the pages of the document generated by the application as the printing target. Also, in the event of the user selecting "CURRENT PAGE", of the multiple pages of the document generated by the application, the printer driver regards the page being displayed now on the screen of the client PC as the printing target. Also, in the event of the user selecting "PAGE SPECIFICATION", of the multiple pages of the document generated by the application, the printer driver regards the pages input to an edit box 503 as the printing target. Also, the printer driver regards the number of copies input to a number-of-printing-copies setting box 504 as the number of copies to be printed.

In the event of completing the setting of a print job to be transmitted to the MFP 110 via the printer driver, the user of the client PC 109 starts generation of the print job by depressing an OK button 506. Note that in the event of canceling generation of the print job, the user depresses a CANCEL button 507.

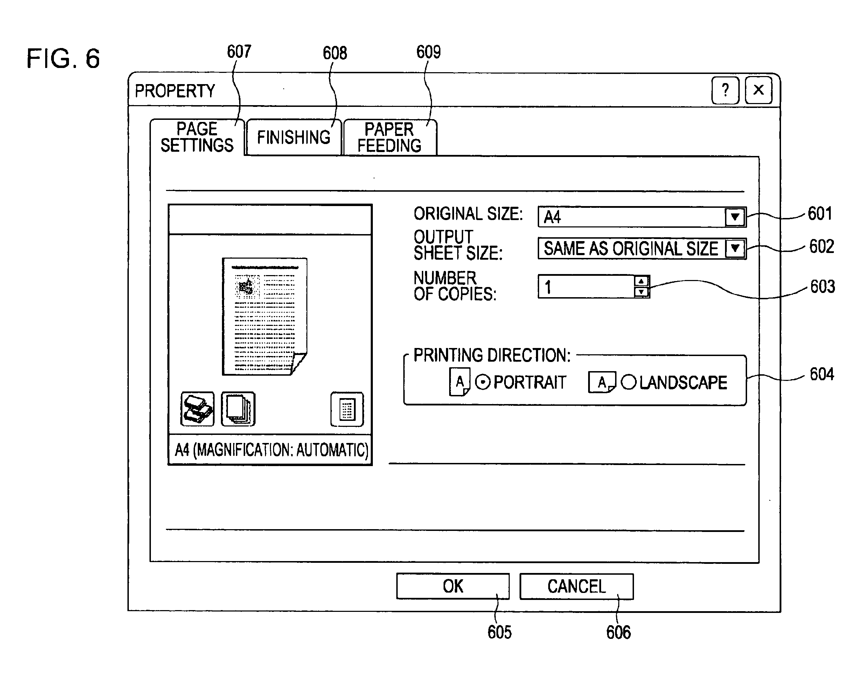

Fig. 6 is a diagram illustrating the screen to be displayed when the property button 505 is depressed at the property setting screen of the printer driver in Fig. 5.

The user operating the client PC 109 operates an original size selection box 601 using a pointing device or the like (not shown). According to this operation, the printer driver selects the size of the respective pages in application data being activated over the client PC 109. Note that the size of originals is usually specified in a document generated by an application, thereby selecting this original size automatically. Also, in the event of the user selecting "SAME AS ORIGINAL SIZE" regarding an output sheet size selection box 602, the printer driver selects the A4 size as a sheet size to be employed for printing processing (output processing) at the MFP 110. Note that the user can select a desired sheet size such as "A3 SIZE", "B5 SIZE", or the like other than "SAME AS ORIGINAL SIZE" as an output sheet size. However, in this case, a size different from the original size is selected, so the printer driver generates a print job while changing the magnification. Also, the printer driver sets the number of copies input in accordance with a desired number of print copies regarding the number-of-copies selection box 603 being input by the user. Also, the printer driver inputs the printing direction selected at a printing direction specification box 604 by the user.

The printer driver determines the values input to the original size selection box 601, output sheet size selection box 602, number-of-copies selection box 603, and printing direction specification box 604 by the user selecting the OK button 605. On the other hand, the printer driver does not determine the values input to the original size selection box 601, output sheet size selection box 602, number-of-copies selection box 603, and printing direction specification box 604, but returns the values to predetermined initial settings by the user selecting the CANCEL button 606.

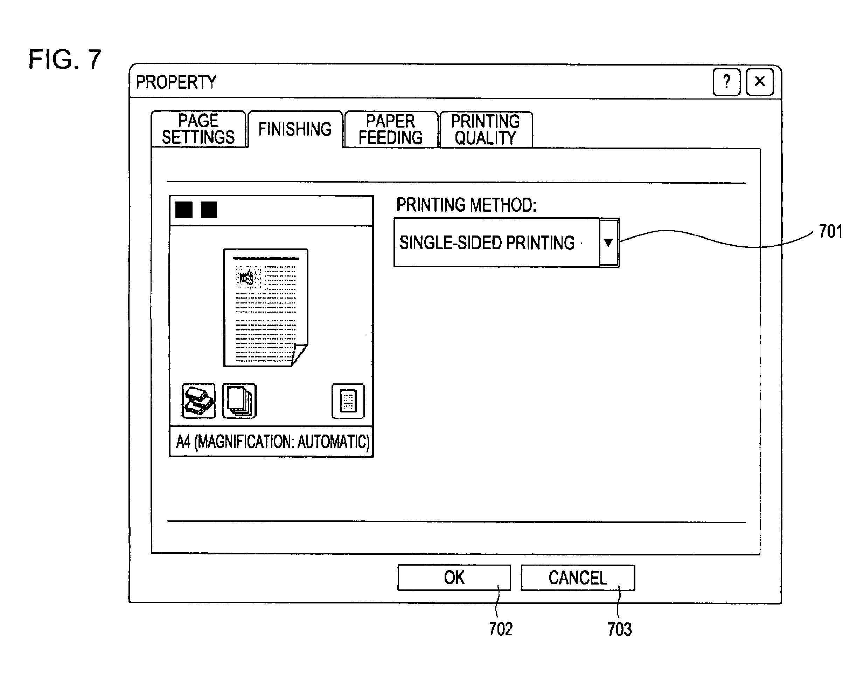

Fig. 7 is a diagram illustrating the screen to be displayed when the finishing tab 608 is selected at the property setting screen of the printer driver in Fig. 6.

The user operating the client PC 109 operates a printing method selection box 701 using an unshown pointing device or the like. According to this operation, the printer driver selects a printing method when causing the MFP 110 to perform printing processing of a print job generated from application data. Note that as a printing method, there are "SINGLE-SIDED PRINTING" for subjecting only the single side of sheets to printing processing, "DUPLEX PRINTING" for subjecting both sides of sheets to printing processing, "BOOKBINDING PRINTING" using the saddle stitcher 628, and so forth.

Subsequently, the printer driver determines the value input to the printing method selection box 701 by the user selecting an OK button 702. On the other hand, the printer driver does not determine the value input to the printing method selection box 701, but returns the value to predetermined initial setting by the user selecting a CANCEL button 703.

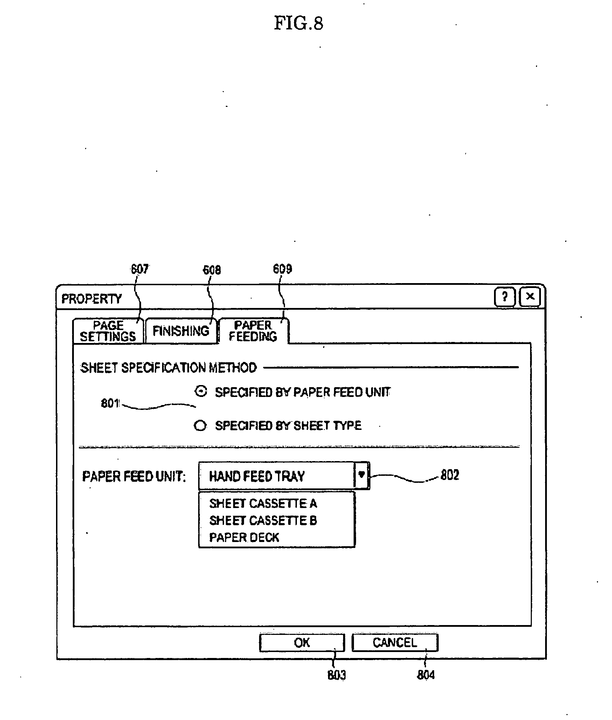

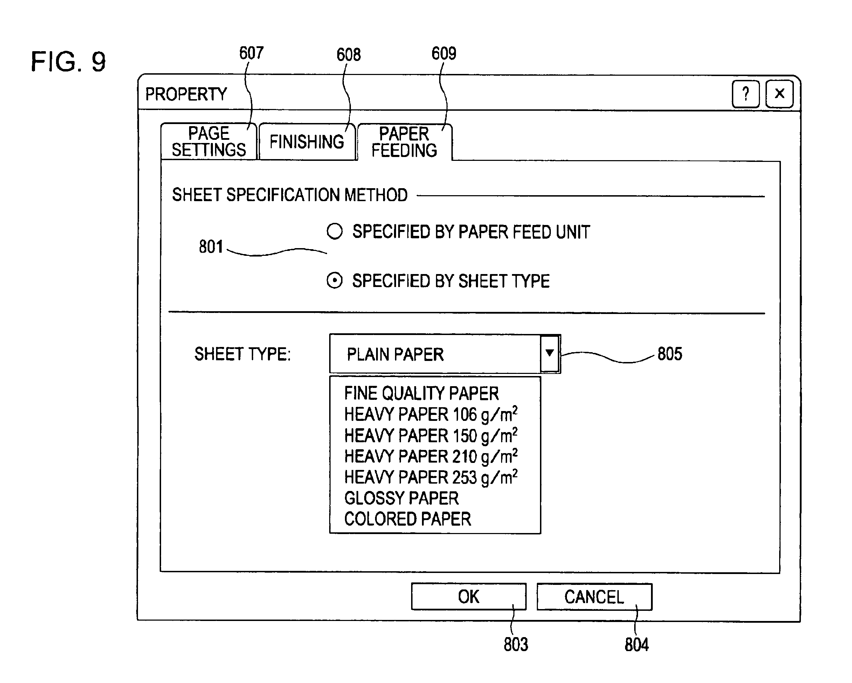

Figs. 8 and 9 are diagrams illustrating the screens to be displayed when the paper feeding tab 609 is selected at the property setting screen of the printer driver in Fig. 6.

The user operating the client PC 109 operates a sheet specification method selection box 801 using an unshown pointing device or the like. According to this operation, in the event of the user selecting a "SPECIFIED BY PAPER FEED UNIT" button, the printer driver sets the paper feed unit selected by the user operating a paper-feed-unit selection box 802 to a print job.

On the other hand, in the event of the user selecting a "SPECIFIED BY SHEET TYPE" button, the printer driver sets the sheets selected by the user operating a sheet-type selection box 805 to a print job.

Subsequently, the printer driver determines the value input to the paper-feed-unit selection box 802 or sheet-type selection box 805 by the user selecting an OK button 803. On the other hand, the printer driver does not determine the value input to the paper-feed-unit selection box 802 or sheet-type selection box 805, but returns the value to predetermined initial setting by the user selecting a CANCEL button 804.

Subsequently, upon settings at the property setting screens of the printer driver in Figs. 6, through 9 being completed (upon the OK button 605, OK button 702, and OK button 803 being depressed), display returns to the setting screen of the printer driver in Fig. 5. Subsequently, upon the OK button 506 in the setting screen of the printer driver in Fig. 5 being depressed, the client PC 109 synthesizes the setting content set at the property setting screen and the application data to generate one print job. Further, the client PC 109 transmits the print job to the MFP 110.

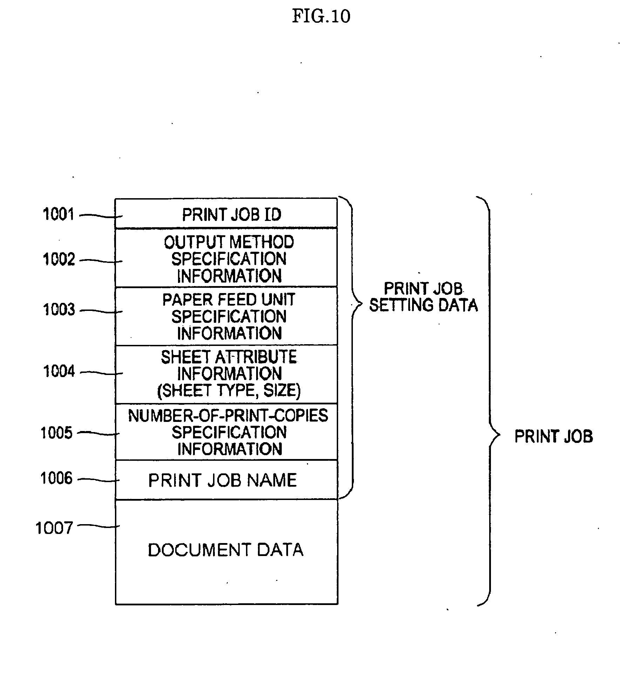

Now, a specific example of the data structure of a print job is illustrated in Fig. 10. Fig. 10 is a diagram illustrating the data structure of a print job which the client PC 109 transmits to the MFP 110.

In Fig. 10, reference numeral 1001 is a print job ID, which is a unique ID to be appended to the print job so as to determine the print job, in the event of the client PC 109 transmitting a print job to the MFP 110 or MFP 111 via the network 104. Reference numeral 1002 is output method specification information, which is information for determining the printing method selected at the printing method selection box 701. Reference numeral 1003 denotes paper-feed-unit specification information, which is information for determining the paper feed unit selected at the paper-feed-unit selection box 802. Reference numeral 1004 denotes sheet attribute information, which is information including sheet size information for determining the output sheet size selected at the output sheet size selection box 602, and sheet type information selected at the sheet-type selection box 805. Reference numeral 1005 denotes number-of-print-copies specification information, which is information for determining the number of printing copies input to the number-of-printing-copies setting box 504 or number-of-copies selection box 603 (the same value is input to each of the boxes). Reference numeral 1006 denotes a print job name wherein text data indicating a file name at the time of being managed by an application is appended as a print job name. Reference numeral 1007 denotes document data, which is document data generated at an application running on the client PC 109.

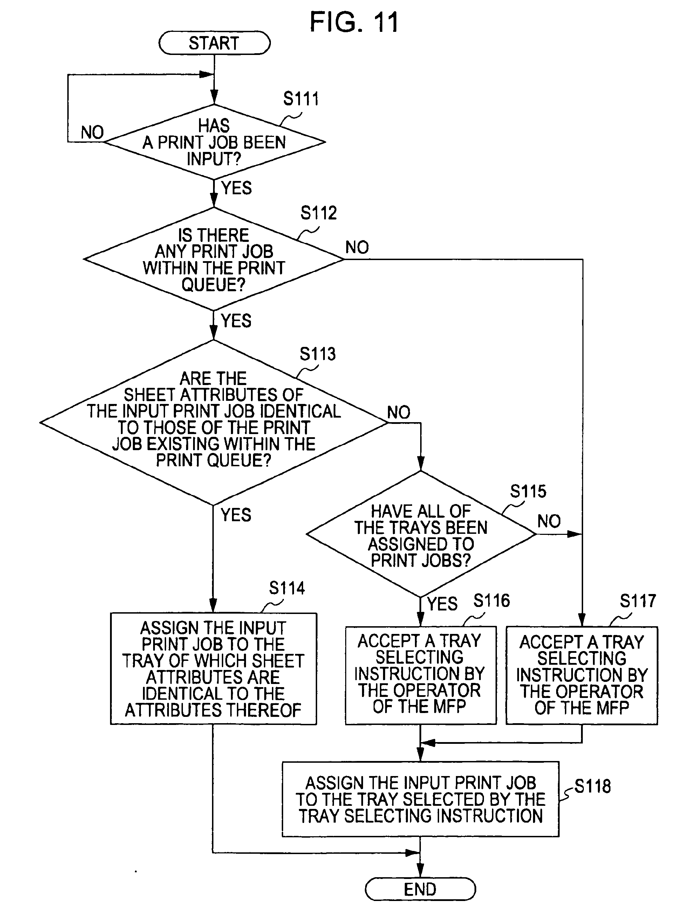

Fig. 11 is a flowchart illustrating reception processing which the MFP 110 executes in the event of receiving a print job from an external device via the external interface 202.

In step S111, the CPU 205 determines whether or not a print job is input (received) from an external device via the external interface 202, and in the event of determining that a print job is input, proceeds to step S112.

In step S112, the CPU 205 determines whether or not there is a print queue in the HDD 209, and in the event of determining that there is a print queue, proceeds to step S113, but in the event of determining that there is no print queue, proceeds to step S117.

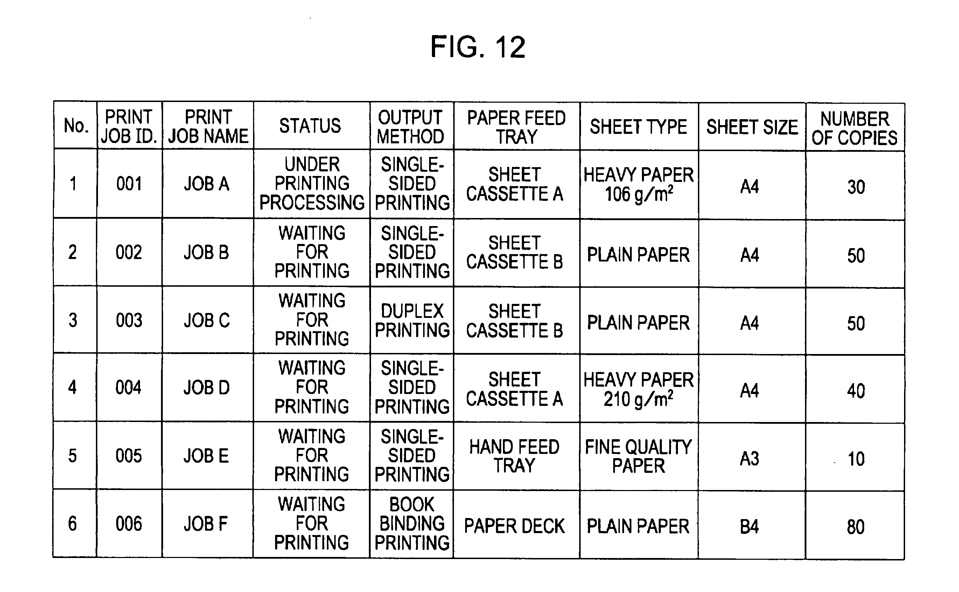

Now, the print queue will be described with reference to Fig. 12. Fig. 12 is a diagram illustrating one example of the print queue to be stored in the HDD 209. In Fig. 12, "No." represents the number of print jobs waiting at the print queue, and Fig. 12 indicates that six print jobs are stored therein. "PRINT JOB ID." is information included in the print job setting data of a print job, which is a unique ID to each of print jobs which the MFP 110 receives. "PRINT JOB NAME" corresponds to a print job name 1006 included in the print job setting data. "STATUS" denotes a processing situation indicating whether a print job is under printing processing, or waiting for printing processing. "OUTPUT METHOD" is included in the print job setting data of a print job, which is information for specifying an output method (e.g., single-sided printing, duplex printing, bookbinding printing) when performing printing processing regarding a print job which the MFP 110 receives. "SHEET TYPE" is for determining the type of sheets to be used for a print job, which is included in the sheet attribute information of a print job. For example, a print job which the client PC 109 transmits to the MFP 110 is specified with one of eight types of plain paper, fine quality paper, heavy paper 106 g/m², heavy paper 150 g/m², heavy paper 210 g/m², heavy paper 253 g/m², glossy paper, and colored paper. "SHEET SIZE" is for determining the size of sheets to be used for a print job, which is included in the sheet attribute information of a print job. For example, a print job which the client PC 109 transmits to the MFP 110 is specified with one of various types such as A4, A5, B5, B4, legal, letter, and so forth. "NUMBER OF COPIES" is for determining the number of copies to be subjected to printing processing at a print job, which is included in the sheet attribute information of a print job, and indicates how many copies are subjected to printing processing with the document data 1006 included in a print job as one copy.

Now, returning to Fig. 11, in step S113, the CPU 205 compares the sheet attribute information 1004 of the print job input in step S111 and the sheet attribute information (sheet type and sheet size) stored in the print queue. Subsequently, in the event of determining that the input print job sheet attribute information is identical to that of any one of the multiple print jobs stored in the print queue, the CPU 205 proceeds to step S114, or in the event of determining that the input print job sheet attribute information is not identical to that of any one of the multiple print jobs, proceeds to step S115. Now, let us say that in the event of the print queue in Fig. 12 being stored in the HDD 209, a print job having sheet attributes "PLAIN PAPER" and "A4" is newly input. In this case, the print job Nos. 2 and 3 are identical to the input print job, the CPU 205 determines as "YES" in step S113.

The CPU 205 allocates the print job input in step S111 to the paper feed tray of the print job of which sheet attributes are determined to be identical in step S113. For example, let us say that determination is made in step S113 that the print job newly input of which sheet attributes are identical to the sheet attributes of the print job No. 2. In this case, the print job input in step S111 is allocated to the sheet cassette B.

On the other hand, in step S114, the CPU 205 determines whether or not all of the paper feed trays included in the MFP 110 (sheet cassette A, sheet cassette B, hand feed tray, and paper deck) are allocated with print jobs based on the print queue in Fig. 12. For example, let us say that in the event that the print queue in Fig. 12 is stored in the HDD 209, a print job of the sheet type "GLOSSY PAPER" and sheet size "A4" is newly input. In this case, all of the paper feed trays included in the MFP 110 are allocated with print jobs Nos. 1 through 6, and accordingly, the CPU 205 determines as "YES" in step S115.

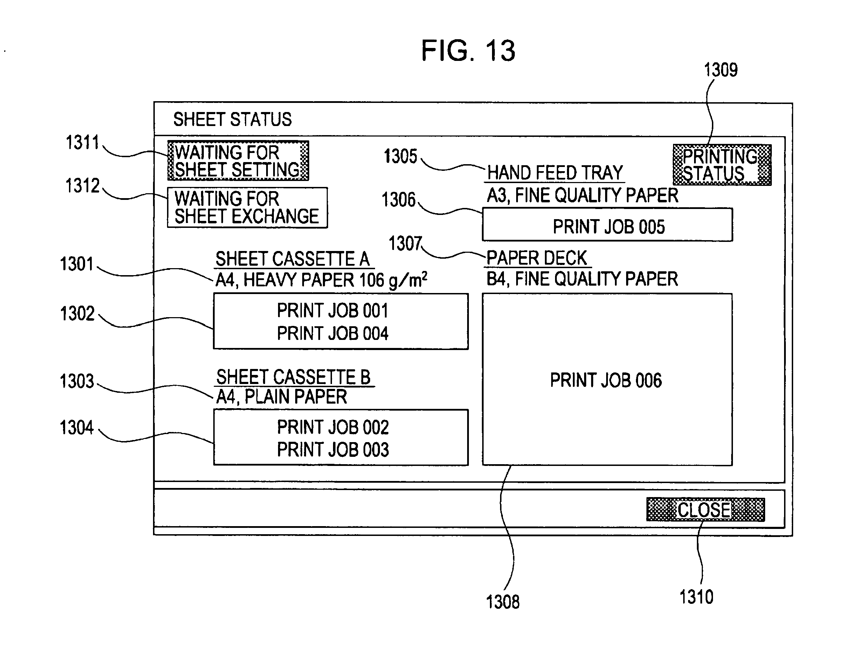

Subsequently, the CPU 205 accepts a tray selecting instruction by the operator of the MFP in step S116. Now, the screen to be displayed on the operating unit 204 of the MFP 110 in step S116 will be described with reference to Fig. 13.

In Fig. 13, reference numeral 1301 denotes the sheet attributes of a print job 001 of the print jobs allocated to the sheet cassette A617. Reference numeral 1302 denotes print jobs allocated to the sheet cassette A617. Reference numeral 1303 denotes the sheet attributes of a print job 002 of the print jobs allocated to the sheet cassette B618. Reference numeral 1304 denotes print jobs allocated to the sheet cassette B618. Reference numeral 1305 denotes the sheet attributes of a print job 005 allocated to the hand feed tray 620. Reference numeral 1306 denotes a print job allocated to the hand feed tray 620. Reference numeral 1307 denotes the sheet attributes of a print job 006 allocated to the paper deck 619. Also, reference numeral 1308 denotes the print job allocated to the paper deck 619.

Reference numeral 1309 is a "PRINTING STATUS" key, which is a key for displaying the print queue shown in Fig. 12 on the screen of the operating unit 204. Reference numeral 1310 is a "CLOSE" key, which is a key for closing the screen shown in Fig. 13, and displaying the initial screen of the operating unit 204.

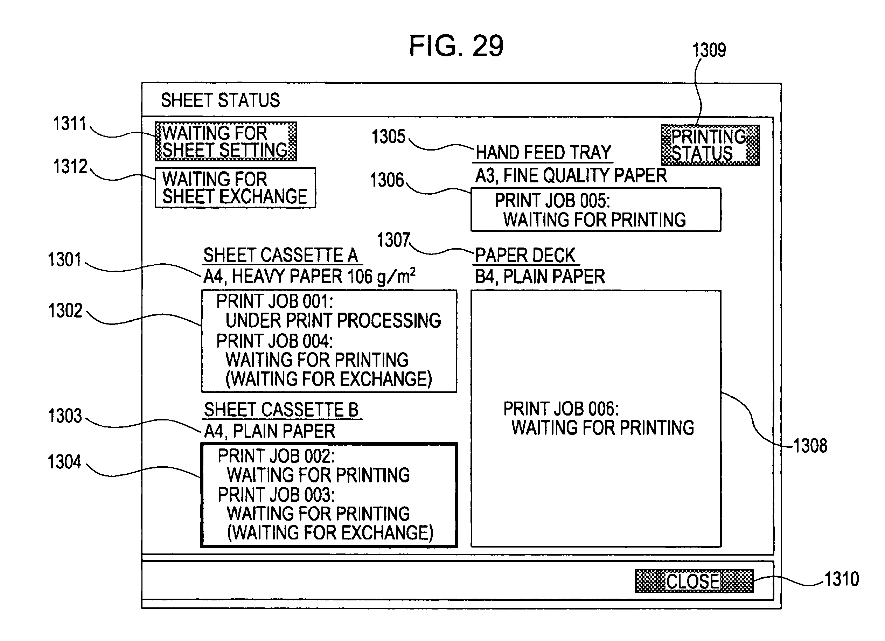

Reference numeral 1311 is a "WAITING FOR SHEET SETTING" key, and this key becomes selectable in the event that there is no paper feed tray of which sheet attributes are identical to the sheet attributes of the print job input in step S111, and also in the event that there is a paper feed tray allocated with no print job. The operator of the MFP 110 can allocate the print job to the paper feed tray by selecting a paper feed tray allocated with no print job following depressing the "WAITING FOR SHEET SETTING" key. Also, reference numeral 1312 is a "WAITING FOR SHEET EXCHANGE" key, and this key becomes selectable in the event that there is no paper feed tray of which sheet attributes are identical to the sheet attributes of the print job input in step S111, and also in the event that there is no paper feed tray allocated with no print job. The operator of the MFP 110 can allocate the print job to the paper feed tray by selecting any of paper feed trays allocated with print jobs following depressing the "WAITING FOR SHEET EXCHANGE" key. Note that the operator of the MFP 110 can allocate the print job input in step S111 to all of the paper feed trays, but the paper feed trays may be displayed on the operating unit 204 so as to identify a preferable paper feed tray as a change target. Specifically, of all of the paper feed trays, the tray which will be released earliest from allocation of a print job (sheet cassette B618 to which the print job 003 is allocated in Fig. 13) may be emphasized in the display such that the operator can recognize this tray (such as by changing its display color). Note that the tray which will be released earliest from allocation of a print job is a tray correlated with a print job that will be completed earliest. An example wherein of all of the paper feed trays, the tray which will be released earliest from allocation of a print job is displayed so as to be distinguished from the other trays, is illustrated in Fig. 29.

Fig. 29 is a diagram similar to Fig. 13, which differs from Fig. 13 in that the processing status of a print job can be identified, and in that the tray correlated with the print job that will be completed earliest can be identified. With the example in Fig. 29, printing processing is performed in the sequence of a print job 001, print job 002, print job 003, print job 004, and so on. The sheet cassette A allocated with the print job 001 will not be released even if the print job 001 ends since the print job 004 is waiting for exchange. On the other hand, the sheet cassette B allocated with the print job 002 and print job 003 will be released if the print job 003 ends. Therefore, with the example in Fig. 29, the operating unit 204 displays so as to distinguish the sheet cassette B from the other sheet cassettes since the sheet cassette B is released earliest from allocation of a print job.

Now, description will return to step S116 in Fig. 11. In step S116, the CPU 205 waits for input of the "WAITING FOR SHEET EXCHANGE" key 1312 by the operator (user) to allocate the print job input in step S111 to any of the plurality of paper feed trays. In response to any of the keys 1302, 1304, 1306, and 1307 being depressed following the "WAITING FOR SHEET EXCHANGE" key 1312 being depressed, the CPU 205 allocates the print job to the paper feed tray corresponding to the depressed key (step S118). For example, upon the key 1308 being selected, the print job input in step S111 is allocated to the paper deck 619.

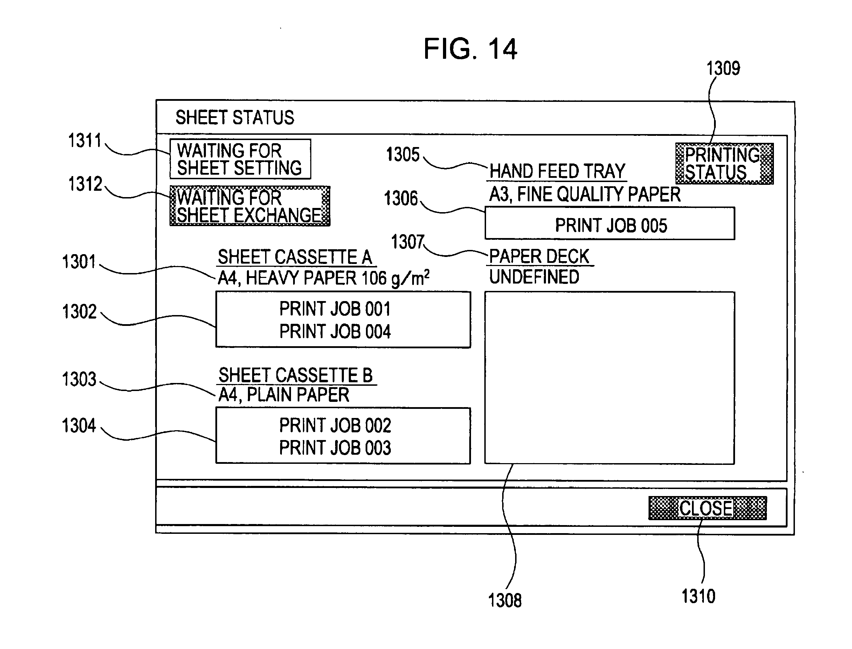

Also, in the event of determining that there is no paper feed tray allocated with a print job in step S115, the CPU 205 accepts a tray selecting instruction by the operator of the MFP 110 in step S117. Now, the screen to be displayed on the operating unit 204 of the MFP 110 in step S117 will be described with reference to Fig. 14.

The difference between Fig. 14 and Fig. 13 is in that a print job is not allocated to the paper deck 619. Subsequently, let us say that the print job input in step S111 has sheet attributes of "PLAIN PAPER" as a sheet type and "B4" as a sheet size. In this case, the "WAITING FOR SHEET SETTING" key 1311 is selectable. Subsequently, the "WAITING FOR SHEET SETTING" key 1311 is depressed, and further the paper deck 619 is selected, whereby the print job is allocated to the paper deck 619. Here, in step S117, it is desirable to enable only the paper feed trays allocated with no print jobs to be selected, and prevent the other paper feed trays allocated with print jobs from being selected. Note that upon step S117 and step S118 being executed, the display screen of the operating unit 204 becomes the screen illustrated in Fig. 13.

According to the above step S111 through step S118, the print job newly input to the MFP 110 is allocated to any of the plurality of paper feed trays.

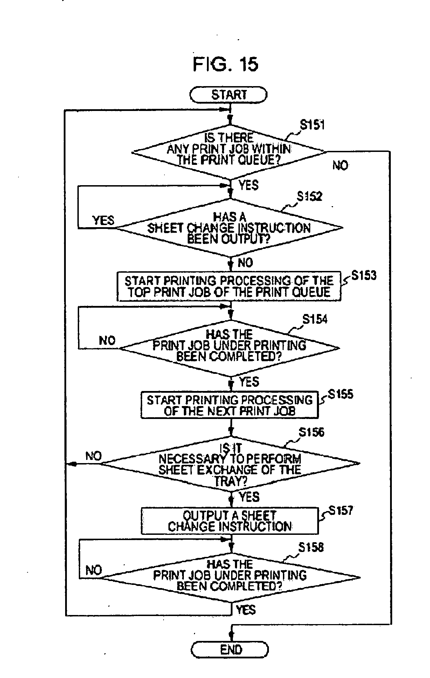

Next, description will be made regarding printing processing to be executed based on the print jobs stored in the print queue such as illustrated in Fig. 12 with reference to Fig. 15.

In step S151, the CPU 205 determines whether or not there is a print job in the print queue, and in the event of determining that there is a print job, proceeds to step S122, otherwise the process flow ends.

In step S152, the CPU 205 determines whether or not a sheet change instruction has been output, and in the event of a sheet change instruction being output, executes step S152, otherwise proceeds to step S153. Note that a sheet change instruction is an instruction that is output in the case of the sheets loaded now in the paper feed tray differing from the sheets to be employed for the next job in the sheet attributes regarding the paper feed tray allocated with the top print job in the print queue.

In step S153, the CPU 205 allows the top print job (print job No. 1) in the print queue to start print processing.

In step S154, the CPU 205 determines whether or not the print processing of the print job that has been allowed to start printing in step S152 has been completed, and in the event of determining that the print job has been completed, proceeds to step S155.

In step S155, the CPU 205 allows the job following the top print job in the print queue (print job No. 2) to start printing processing.

In step S156, the CPU 205 determines whether or not there is the need to change the sheets in the paper feed tray, and in the event of determining that there is the need, proceeds to step S157, otherwise returns to step S151. Here, the CPU 205 determines whether or not there is the need to change the sheets in the tray as follows. First, in step S154 the CPU 205 confirms the sheet cassette employed for the print job (print job No. 1) of which processing has been completed. With the example of the print queue in Fig. 12, this sheet cassette is the sheet cassette A167. Subsequently, the CPU 205 confirms whether or not a print job employing the same sheet cassette as that employed for the print job No. 1 is stored in the print queue. With the example of the print queue in Fig. 12, the print job No. 4 is specified so as to employ the sheet cassette A, which is confirmed. Next, the CPU 205 determines whether or not the sheet attributes of the print job No. 1 and the sheet attributes of the print job No. 4 agree. In the case of the example of Fig. 12, determination is made that the sheet attributes differ since the sheet attributes of the print job No. 1 include heavy paper 106 g/m² as a sheet type, but the sheet attributes of the print job No. 4 include heavy paper 210 g/m². In this case, the sheet attributes of the multiple print jobs specifying the sheet cassette A167 differ, and there is the need to change the sheets, so that the CPU 205 determines as "YES" in step S155. For example, in the event that the print job No. 4 does not exist in the print queue in Fig. 12, the CPU 205 determines as "NO" in step S156, and returns to step S151.

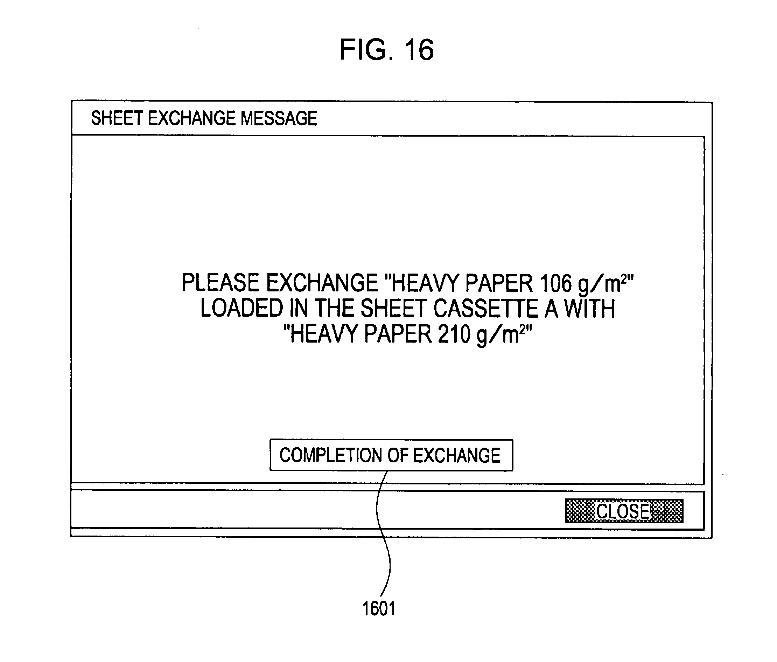

In step S157, the CPU 205 outputs a sheet change instruction. Specifically, the sheet attributes between the sheets employed for the print job No. 1 and the sheets employed for the print job No. 4 differ, so that the CPU 205 outputs a change instruction so as to change heavy paper 106 g/m² with heavy paper 210 g/m² (Fig. 16). This change instruction is displayed via the operating unit 204 so as to be identified by the operator (user) of the MFP 110. Also, in Fig. 16, reference numeral 1601 denotes a "COMPLETION OF EXCHANGE" key, and the operator of the MFP 110 depresses this key following change of the sheets according to the sheet change instruction, whereby the CPU can recognize that the sheet change according to the sheet change instruction has been completed. Upon this "COMPLETION OF EXCHANGE" key being depressed, the CPU can recognize in step S152 that the current state is a state in which a sheet change instruction is not output.

In step S158, the CPU 205 determines whether or not the print job being printed has been completed, and in the event of determining that the print job has not been completed, executes step S158 again, otherwise returns to step S151.

Note that the "STATUS" of the print job allocated to the paper feed tray to which a sheet change instruction is output becomes "WAITING FOR SHEET EXCHANGE". With regard to a print job of which "STATUS" is "WAITING FOR SHEET EXCHANGE", even in the event that the print job becomes the top in the print queue, printing processing is not started until the "STATUS" becomes "WAITING FOR PRINTING" by the "COMPLETION OF EXCHANGE" key 1601 being depressed. In this case, the printing processing of the second and subsequent print jobs of which "STATUS" is "WAITING FOR PRINTING" may be arranged so as not to be started, or so as to be started.

According to the first exemplary embodiment, even in the event that a print job employing sheets having attributes which are not loaded in any of the plurality of paper feed trays included in the MFP 110 is input, the CPU 205 can control the MFP 110 to execute an appropriate operation. Additionally, a print job input can be allocated to an appropriate paper feed tray which the operator of the MFP 110 selects, and also a printer instructing change of sheets at an appropriate time can be provided.

### Second exemplary embodiment

Next, a second exemplary embodiment of the present invention will be described. The second exemplary embodiment is the same as the first exemplary embodiment except in that the operation in step S116 according to the first exemplary embodiment differs.

With the first exemplary embodiment, determination is made regarding whether or not the sheet attributes of a new print job are identical to those of the print job existing in the print queue (S113). Subsequently, in the event that there is no paper feed tray of which sheet attributes are identical to those of the new print job, determination is made whether or not all of the paper feed trays are allocated with print jobs (S116).

Also, with the first exemplary embodiment, an arrangement has been made wherein the screen in Fig. 13 is displayed to accept a tray selecting instruction by the operator of the MFP in step S116.

On the other hand, with the second exemplary embodiment, an arrangement is made wherein a tray selecting instruction by the operator of the MFP is not accepted in step S116, but a tray selecting instruction is set beforehand, and selection of a paper feed tray is performed based on the tray selecting instruction thereof.

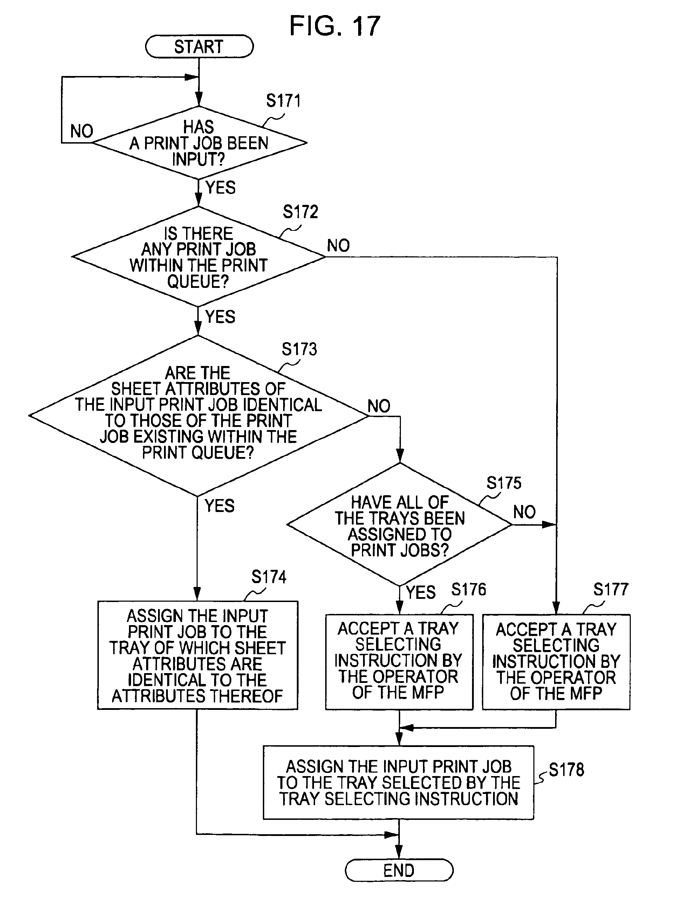

Fig. 17 is a flowchart illustrating reception processing which the MFP 110 executes in the event of receiving a print job from an external device via the external interface 202. Note that steps S171 through S178 in Fig. 17 are the same as steps S111 through S118 in Fig. 11 except for step S176, so description thereof will be omitted.

Now, description will be made regarding the operation in step S176 in Fig. 17.

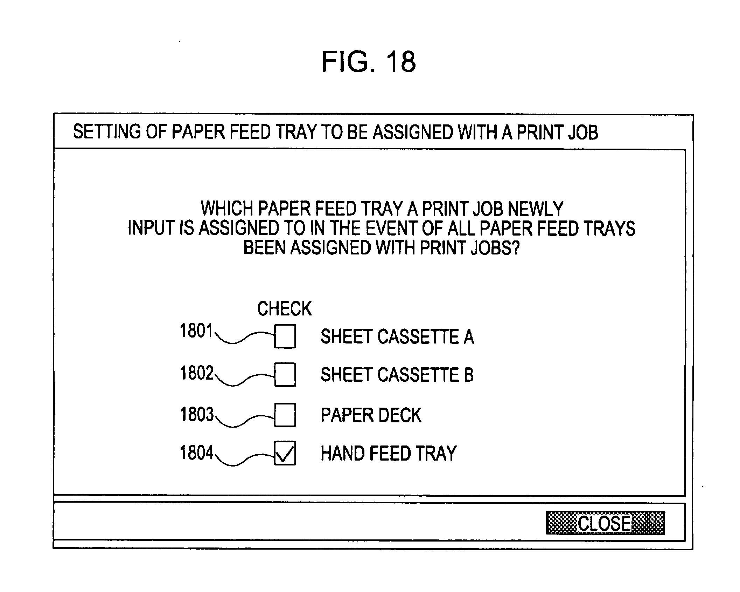

Fig. 18 is a diagram illustrating the display screen of the operating unit 204 for accepting a paper-feed-tray selecting instruction beforehand. Fig. 18 illustrates the display screen for storing a tray selecting instruction that the CPU 205 reads out from the HDD 209 in step S176 in Fig. 17 in the HDD 209. The operator of the MFP 110 selects a paper feed tray by checking one of check boxes 1801 through 1804 in Fig. 18. Note that checking a check box enables a desired tray to be selected from the four paper feed trays of the sheet cassette A617, sheet cassette B618, paper deck 619, and hand feed tray 620. For example, in the event that the paper deck 619 is a paper feed tray capable of loading large volumes of sheets, and also it is desired to prevent sheets from being frequently changed, it is necessary to check the check box 1803. Also, in the event that it is desired to change sheets frequently in the hand feed tray 619, it is necessary to check the check box 1804.

In Fig. 18, the check box 1804 is selected, so that the hand feed tray 620 is selected. Upon the hand feed tray 620 being selected, the CPU 205 stores tray selecting instruction information indicating that the hand feed tray has been selected in the HDD 209.

Subsequently, in step S176 in Fig. 17, the CPU 205 reads out the tray selecting instruction information stored in the HDD 209, and determines whether or not any of the paper feed trays is selected. In step S178, the CPU 205 allocates the input print job to the hand feed tray 620 selected with the tray selecting instruction.

According to the second exemplary embodiment, when a print job of which sheet attributes are not identical to any sheet attributes loaded in the plurality of paper feed trays is input, the CPU 205 reads out the tray selecting instruction stored in the HDD 209. Thus, the MFP 110 which allocates an appropriate paper feed tray corresponding to the content specified by the operator of the MFP 110 prior to a print job being input can be provided.

### Third exemplary embodiment

A third exemplary embodiment of the present invention will now be described. The third exemplary embodiment is the same as the first exemplary embodiment except in that the operation in step S113 in Fig. 11 according to the first exemplary embodiment differs.

With the first exemplary embodiment, a print job is allocated to any of the plurality of paper feed trays. Subsequently, in step S113 in Fig. 11, the CPU 205 determines whether or not there is a print job having sheet attributes identical to the sheet attributes of the print job input in step S111 in the print queue. Subsequently, in the event of determining that there is a print job having the same sheet attributes, the CPU 205 selects the paper feed tray allocated with the print job.

On the other hand, with the third exemplary embodiment, the sheet attributes corresponding to a paper feed tray are stored in the HDD 209 beforehand. Subsequently, the CPU 205 allocates a print job input to the paper feed tray of which sheet attributes are identical to those of the print job based on information relating to the sheet attributes stored in the HDD 209.

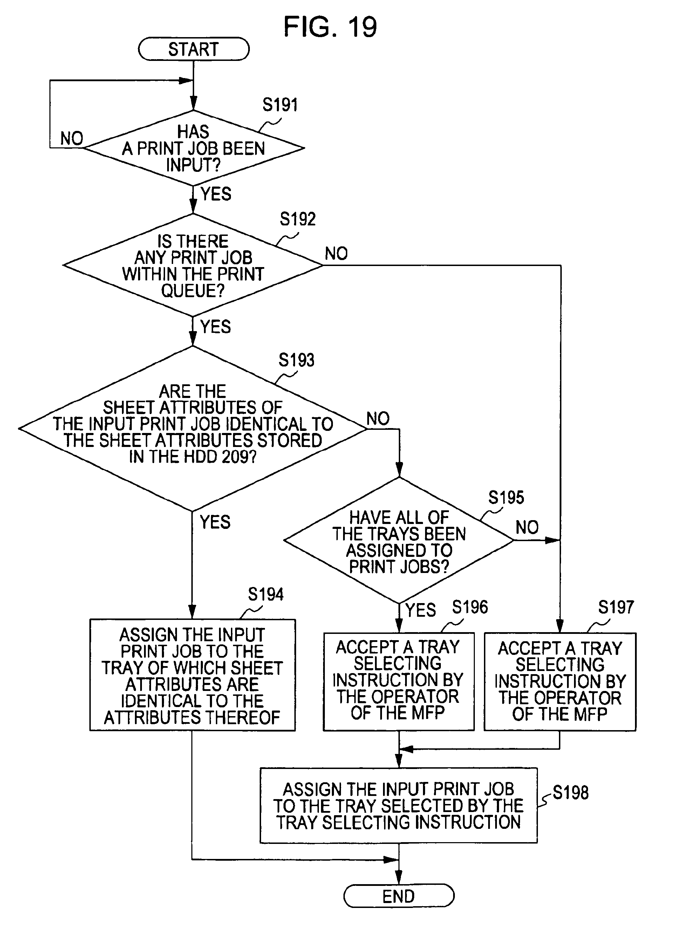

Fig. 19 is a flowchart illustrating reception processing which the MFP 110 executes in the event of receiving a print job from an external device via the external interface 202. Note that steps S191 through S198 in Fig. 19 are the same as steps S111 through S118 in Fig. 11 except for step S193, so description thereof will be omitted.

Now, the operation in step S193 in Fig. 19 will be described.

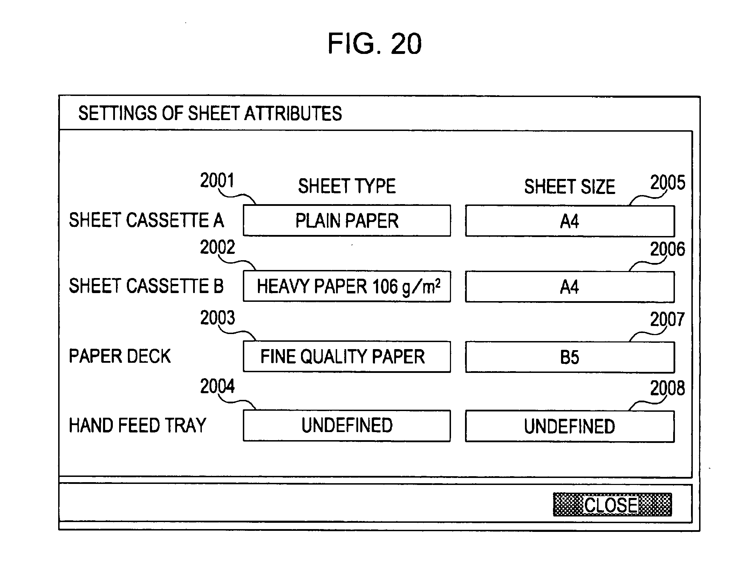

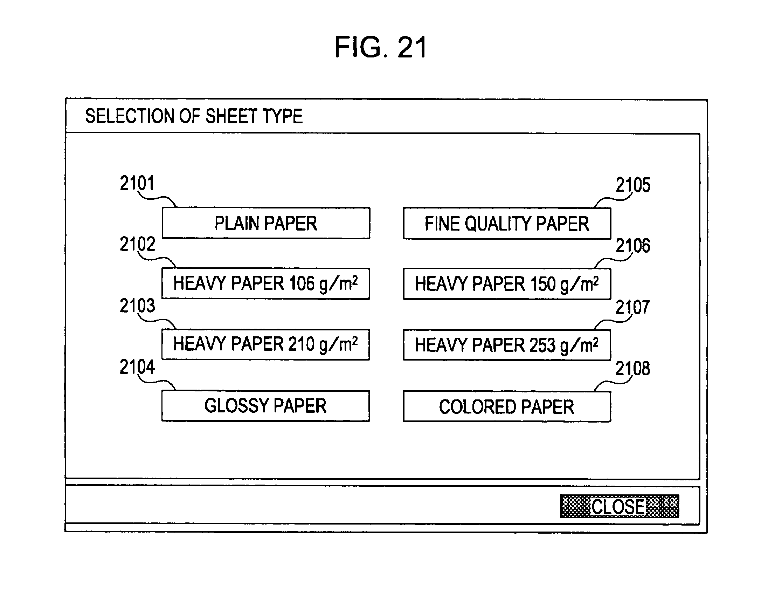

Fig. 20 is a diagram illustrating the display screen of the operating unit 204 for setting sheet attributes to the paper feed trays. Fig. 20 illustrates the display screen for storing sheet attribute information that the CPU 205 reads out from the HDD 209 in step S193 in Fig. 19 in the HDD 209. The operator of the MFP 110 displays the display screen in Fig. 21 by depressing any of "SHEET TYPE SETTING" keys 2001 through 2004 in Fig. 20.

Fig. 21 is a display screen for setting a sheet type, the operator of the MFP 110 sets a sheet type by depressing any of 2101 through 2108 in Fig. 21. Now, in the event that the operator of the MFP 110 depresses the "SHEET TYPE SETTING" key 2001 to display the display screen in Fig. 21, the sheet type regarding the sheet cassette A617 is set. Also, in the event that the operator of the MFP 110 depresses the "SHEET TYPE SETTING" key 2002 to display the display screen in Fig. 21, the sheet type regarding the sheet cassette B618 is set. Also, in the event that the operator of the MFP 110 depresses the "SHEET TYPE SETTING" key 2003 to display the display screen in Fig. 21, the sheet type regarding the paper deck 619 is set. Also, in the event that the operator of the MFP 110 depresses the "SHEET TYPE SETTING" key 2004 to display the display screen in Fig. 21, the sheet type regarding the hand feed tray 620 is set.

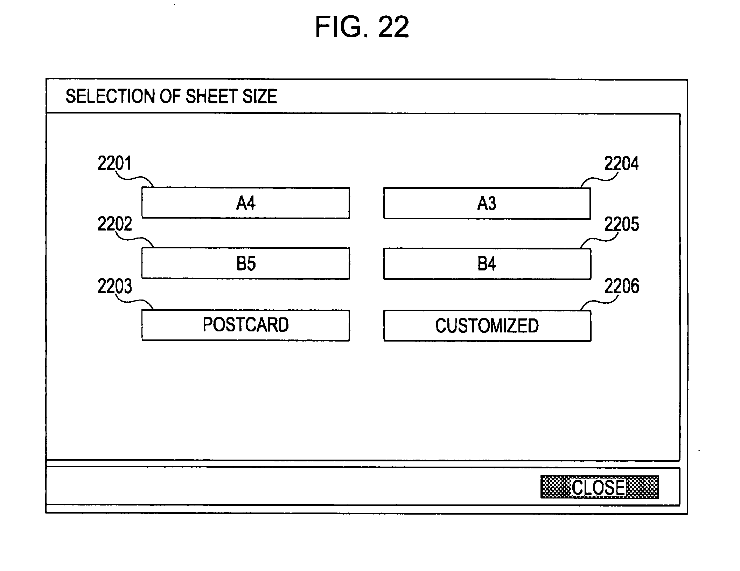

Fig. 22 is a display screen for setting a sheet size, the operator of the MFP 110 sets a sheet size by depressing any of 2201 through 2206 in Fig. 22. Now, in the event that the operator of the MFP 110 depresses the "SHEET SIZE SETTING" key 2005 to display the display screen in Fig. 22, the sheet size regarding the sheet cassette A617 is set. In the event that the operator of the MFP 110 depresses the "SHEET TYPE SETTING" key 2006 to display the display screen in Fig. 22, the sheet size regarding the sheet cassette B618 is set. Also, in the event that the operator of the MFP 110 depresses the "SHEET TYPE SETTING" key 2007 to display the display screen in Fig. 22, the sheet size regarding the paper deck 619 is set. Also, in the event that the operator of the MFP 110 depresses the "SHEET TYPE SETTING" key 2008 to display the display screen in Fig. 22, the sheet size regarding the hand feed tray 620 is set.

The sheet attributes set by 2001 through 2008 in Fig. 20 as described above are associated with each of the paper feed trays and stored in the HDD 209.

Now, description will return to the operation in step S193 in Fig. 19. In step S193, the CPU 205 reads out the sheet attributes stored in the HDD 209, and determines whether or not there is a paper feed tray of which sheet attributes are identical to the sheet attributes included in the print job input in step S181. In the event of determining that there is a paper feed tray of which sheet attributes are identical to the sheet attributes included in the print job, the CPU 205 allocates the print job input in step S184 to the paper feed tray of which sheet attributes are identical to the sheet attributes included in the print job. On the other hand, in the event of determining that there is no paper feed tray of which sheet attributes are identical to the sheet attributes included in the print job, the CPU 205 proceeds to step S185.

According to the third exemplary embodiment, the sheet attributes corresponding to a paper feed tray are stored in the HDD 209 beforehand, following which an appropriate operation corresponding to the sheet attributes determined by a print job input can be executed.

### Fourth exemplary embodiment

A fourth exemplary embodiment of the present invention will now be described. The fourth exemplary embodiment is the same as the first exemplary embodiment except that the operation in step S157 in Fig. 15 according to the first exemplary embodiment differs.

With the first exemplary embodiment, output of a sheet change instruction in step S157 is displayed at the operating unit 204. On the other hand, with the fourth exemplary embodiment, output of a sheet change instruction is notified to an optional notification destination.

Regarding optional notification destinations, an arrangement can be conceived wherein the client PC 109 to be employed by the operator operating the MFP 110 is specified. In this case, an IP address of the client PC 109, and an e-mail address to be used at the client PC are registered on the HDD 209 of the MFP 110 beforehand, and a sheet change instruction is transmitted to the IP address or e-mail address in step S157. The client PC 109 which received the data indicating the sheet change instruction notifies information indicating the sheet change instruction to the operator via a display included in the client PC 109. Thus, in the event of the need for sheet change occurring, a sheet change instruction can be notified to the operator to perform sheet change in a sure manner.

Also, as for an optional notification destination, a transmission source terminal which has transmitted a print job serving as a change target to the MFP 110 may be specified. In this case, the IP address of the transmission source terminal (e.g., client PC 109, user terminal 101) which transmitted the print job to the MFP 110 is registered on the HDD 209 of the MFP 110 beforehand. Subsequently, a sheet change instruction is transmitted to the IP address registered in step S157. The terminal which received the data indicating a sheet change instruction (e.g., client PC 109) notifies a terminal user of information indicating the sheet change instruction via a display included in the terminal. Thus, in the event of the need for sheet change occurring, a sheet change instruction can be notified to the operator of the transmission source of the print job of which sheets should be changed in a sure manner.

### Fifth exemplary embodiment

Next, a fifth exemplary embodiment of the present invention will be described. With the fifth exemplary embodiment, the configuration of the printing system is the same as that in the first exemplary embodiment, so description thereof will be omitted.

With the first exemplary embodiment, one pair of sheet attributes have been specified for one print job. On the other hand, the fifth exemplary embodiment differs from the first exemplary embodiment in that one print job includes different multiple pairs of sheet attributes depending on the pages.

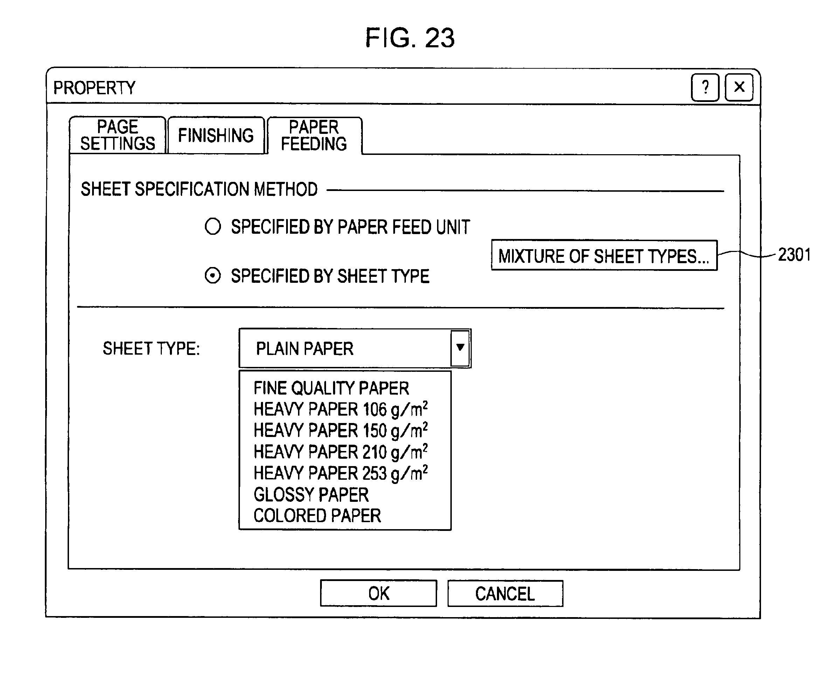

Fig. 23 is a diagram illustrating the screen to be displayed when the paper feeding tab 608 is selected in the property setting screen of the printer driver in Fig. 6. A point different from Fig. 9 according to the first exemplary embodiment is in that a "MIXTURE OF SHEET TYPES..." button 2301 is added. This button 2301 is used in the case that different sheet attributes are provided for each page within one print job.

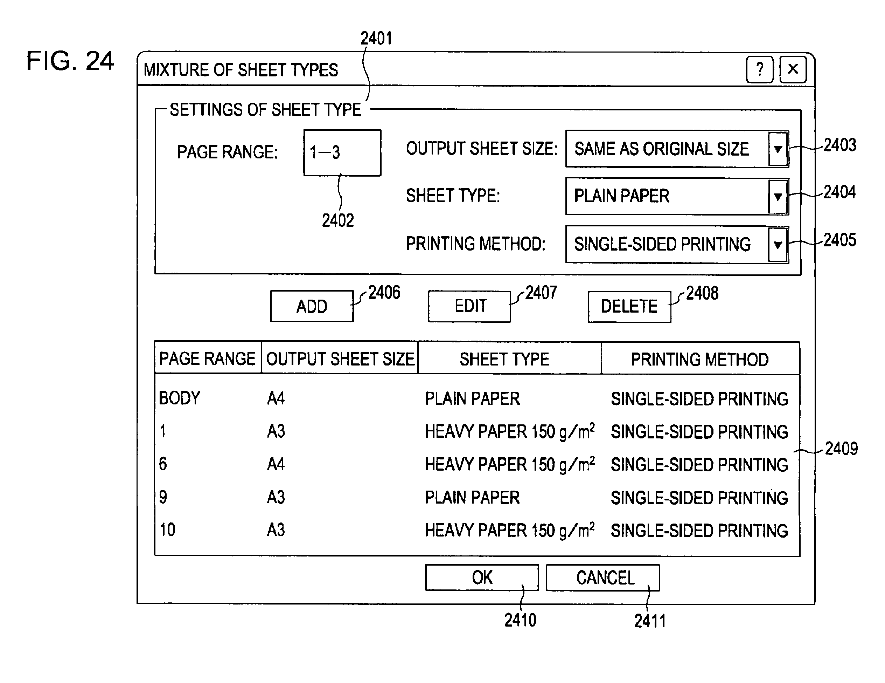

Fig. 24 is a diagram illustrating the screen to be displayed when the "MIXTURE OF SHEET TYPES..." button 2301 is selected at the property setting screen in Fig. 23. At a sheet type setting section 2401 the sheet type of a certain page range is set. At this sheet type setting section 2401 there are the setting items of a page range 2402, an output sheet size 2403, a sheet type 2404, and a printing direction 2405. With the page range 2402, one page is specified, or multiple pages are specified with hyphens and commas, such as "3", "1-3", "1, 3-5", or the like. The output sheet size 2403, sheet type 2404, and printing direction 2405 are the same as the output sheet size 602, sheet type 805, and printing method 701 according to the first exemplary embodiment, respectively. At a setting list section 2409 the setting content set to each of the page ranges is displayed. At the first line displayed as a page range "Body" the setting content according to the overall pages of a print job is displayed. In the event that all of the page ranges cannot be displayed on the screen, a vertical scroll bar appears. Upon an ADD button 2406 being depressed, the settings of the sheet type setting section 2401 are reflected upon the setting list section 2409. Upon any one line of the setting list section 2409 being selected, the selected line is reversely displayed, and in this state, upon an EDIT button 2407 being selected, the setting content of the selected line is copied to the sheet type setting section 2401, which can be modified. Upon a DELETE button 2408 being depressed in a state in which any one line of the setting list section 2409 is selected and reversely displayed, that line is deleted following confirmation at a confirmation dialogue.

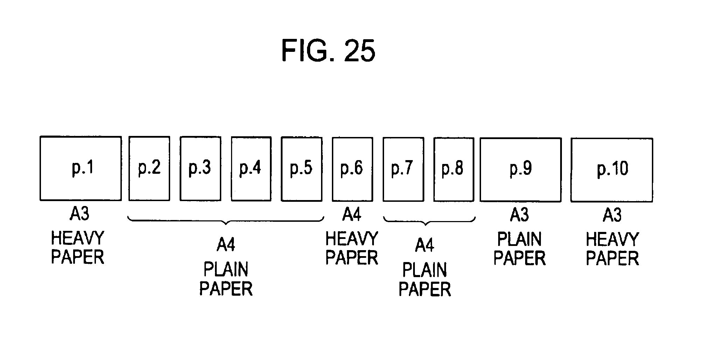

Fig. 25 illustrates one example of a job having different sheet attributes for different pages within the one print job. This print job corresponds to the print job displayed on the setting list section 2409 in Fig. 24. P. 1 through P. 10 represent page sequence, with the print job in Fig. 25 being a print job made up of 10 pages.

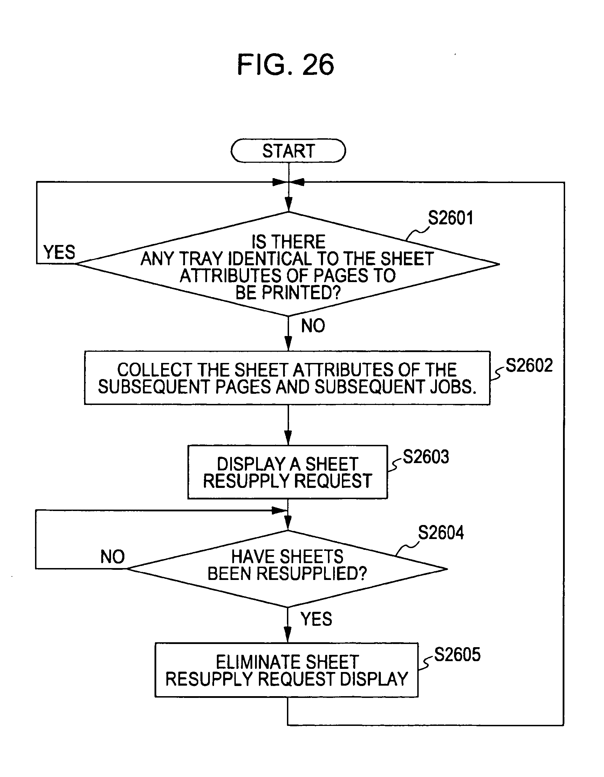

Fig. 26 is a flowchart illustrating the display processing of a sheet change instruction that the MFP 110 executes in the event of receiving a print job from an external device via the external interface 202. In step S2601, determination is made whether or not there is a paper feed tray of which sheet attributes are identical to those of pages to be printed. In the event that there is a matching paper feed tray, paper is supplied from the paper feed tray thereof to execute printing processing. In the event that there is no matching paper feed tray, in step S2602 the sheet attributes of the subsequent pages are collected, and determination is made whether or not there is a paper feed tray of which sheet attributes are identical to those of the respective pages. Subsequently, in step S2603 the display processing of the sheet change instruction is performed. In step S2604, determination is made whether or not the sheets requested for sheet change have been supplied, and in the event of the sheets being supplied, in step S2605 the display processing of the sheet change instruction is stopped.

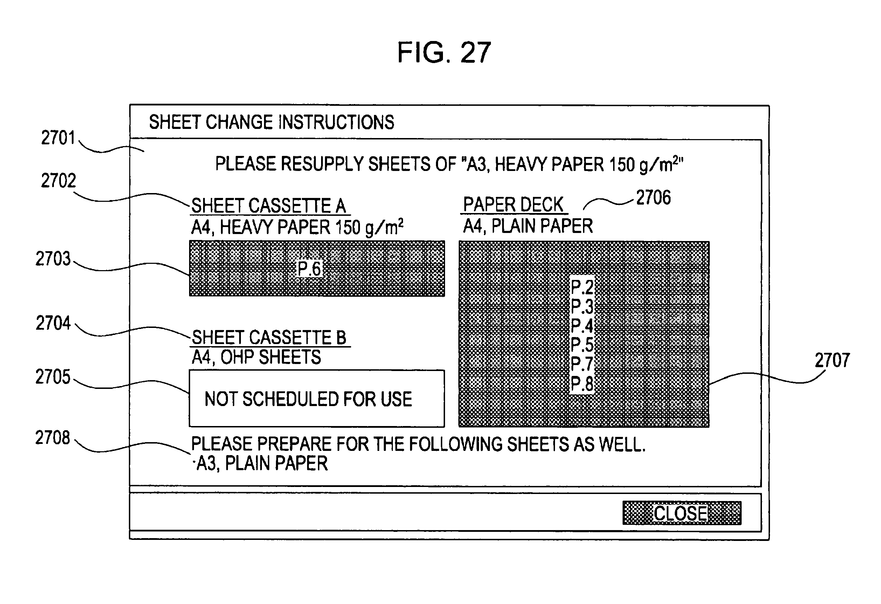

Fig. 27 illustrates a screen display example of a sheet change instruction which is displayed in step S2604. In this example, a message 2701 displays the sheet change instruction of A3 heavy paper 150 g/m². The current use situations of the paper feed trays are displayed under the request message 2701 thereof. The size and type of sheets loaded in the sheet cassette A are displayed on 2702, the size and type of sheets loaded in the sheet cassette B are displayed on 2704, and the size and type of sheets loaded in the paper deck are displayed on 2706. Whether or not there are pages to be used for the print job regarding the respective paper feed trays is displayed on 2703, 2705, and 2707 based on the sheets attributes of the subsequent pages collected in step S2602. Further, a change instruction of sheets to be supplied later is also displayed on 2708 based on the sheets attributes of the subsequent pages, whereby the operator can prepare for the sheets beforehand. The example in Fig. 27 displays that P. 2 through P. 5, P. 7, and P. 8 use the paper deck, and P. 6 uses the sheet cassette A. Note that with regard to A3 heavy paper 150 g/m² used for the printing processing of P. 1, the above message is displayed on 2701 since A3 heavy paper 150 g/m² is not loaded in any of the paper feed trays. Also, A3 plain paper which is employed for P. 9 and P. 10 is not loaded in any of the paper feed trays, so the above message is displayed on 2708.

Note that with the fifth exemplary embodiment, an arrangement has been made wherein the sheet attribute information of the respective pages of one print job is collected, but in addition to this, an arrangement may be made wherein the sheet attribute information of the subsequent print jobs is collected.

### Sixth exemplary embodiment

Next, description will be made regarding a sixth exemplary embodiment of the present invention. The sixth exemplary embodiment is the same as the fifth exemplary embodiment except in that the display processing of the sheet change instruction in Fig. 27 according to the first exemplary embodiment differs.

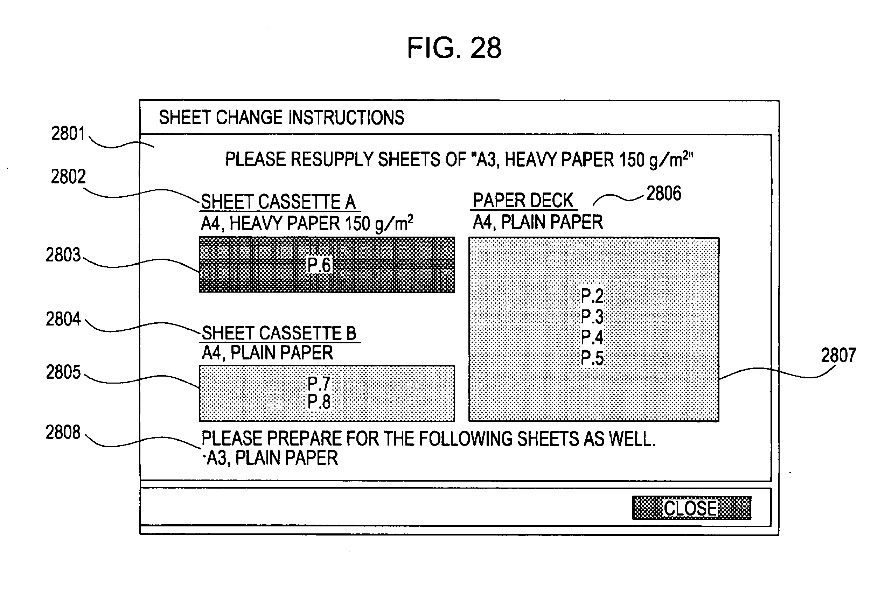

Fig. 28 illustrates a sheet change instruction example to be displayed in step S2603. With this example, a message 2801 requests sheet change (supply) of A3 heavy paper 150 g/m². Under the request message 2801 thereof the current use situations of the paper feed trays are displayed. The size and type of sheets loaded in the sheet cassette A are displayed on 2802, the size and type of sheets loaded in the sheet cassette B are displayed on 2804, and the size and type of sheets loaded in the paper deck are displayed on 2806. Whether or not there is a schedule for the subsequent pages using the sheets loaded in the respective paper feed trays is displayed on 2803, 2805, and 2807 based on the sheets attributes of the subsequent pages collected in step S2602. Further, a change instruction of sheets to be supplied later is also displayed on 2808 based on the sheet attributes of the subsequent pages, whereby the operator can prepare for the sheets beforehand so as to change (supply) the sheets.

A feature of the sixth exemplary embodiment is that in a case wherein there is a plurality of paper feed trays having the same sheet attributes for the paper feed trays to be used, this is displayed in a identifiable manner, as with 2805 and 2807 in Fig. 28. With the example in Fig. 28, such paper feed trays are displayed with the same texture, whereby they can be visually distinguished.

### Other embodiments

So far embodiment examples have been described in detail, but the present invention can be applied to an embodiment as a system, device, method, program, or storage medium (recording medium). Specifically, the present invention may be applied to a system made up of a plurality of devices, or may be applied to equipment made up of a single device.

Note that the present invention can be also achieved with an arrangement wherein a software program for realizing the functions of the above exemplary embodiments is supplied directly or remotely to a system or device, and a computer of the system or device reads out and executes the supplied program code. The program mentioned here means the program corresponding to the flowchart illustrated in the drawing with the exemplary embodiment.

Therefore, in order to realize the function processing of the present invention using a computer, the program code itself to be installed in the computer realizes the present invention. That is to say, a computer program itself for realizing the function processing of the present invention is also encompassed in the present invention.

In this case, the program may be any form such as an object code, a program to be executed by an interpreter, script data to be supplied to an operating system may be employed as long as the program has the functions of a program.

Examples of recording media for supplying the program include floppy (registered trademark) disks, hard disks, optical disks, magneto-optical (MO) disk, CD-ROM, CD-R, and CD-RW. Additionally, magnetic tapes, non-volatile memory cards, ROM, DVD (DVD-ROM, DVD-R), or the like are included.

Additionally, the program can be supplied by an arrangement wherein a client computer is connected to a homepage of the Internet using a browser of the client computer, and the computer program itself of the present invention is downloaded from the homepage. Also, the program can be supplied by downloading a file including a compressed automatic installation function into a recording medium such as a hard disk or the like. Also, the program can be supplied by an arrangement wherein the program code making up the program of the present invention is divided into multiple files, and the respective files are downloaded from different homepages. That is to say, a WWW server for downloading a program file for realizing the function processing of the present invention at a computer as to multiple users is also encompassed in the present invention.

Also, there is a method wherein the program of the present invention is encrypted and stored in a recording medium such as CD-ROM or the like to distribute this to users, and the users satisfying predetermined conditions are allowed to download key information for deciphering encryption thereof from a homepage via the Internet. With this method, the program encrypted may be executed by using the key information to be installed into a computer.

The functions of the above exemplary embodiment are realized by the computer executing the readout program. Also, an operating system or the like running on the computer performs a part or all of the actual processing based on the instruction of program thereof, whereby the functions of the above exemplary embodiment can be realized by processing thereof.

Further, a method can be conceived wherein the program read out from a recording medium writes a program instruction in a function expansion board inserted in the computer or a function expansion unit connected to the computer. In this case, the CPU or the like included in the function expansion board or function expansion unit performs a part or all of the actual processing based on the written program instruction, thereby realizing the functions of the above exemplary embodiment.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures and functions.

## Claims

1. A printing apparatus comprising:
input means (201, 202) for inputting a print job;
printing means (203) configured to performing print processing on sheets based on a print job input by the input means;
a plurality of sheet loading means (617, 618, 619, and 620), each adapted to supply sheets to said printing means;
holding means (209) for holding a plurality of sets of sheet attribute information, each set relating to the attributes of sheets loaded in one of the plurality of sheet loading means;
selecting means (205) configured to select any of the plurality of sheet loading means;
allocation means (205) configured to allocate said print job to the sheet loading means of which the sheet attribute information is identical to said print job in the case where the sheet attribute information included in said print job is identical to any of a plurality of sets of sheet attribute information held by said holding means, or allocating said print job to the sheet loading means selected by said selecting means in the case where the sheet attribute information included in said print job is not identical to any of a plurality of sets of sheet attribute information held by said holding means; and
output means (204) for outputting a change instruction for changing the sheets loaded in sheet loading means, **characterized in that** said output means outputs a change instruction for changing the sheets loaded in a particular sheet loading means with sheets corresponding to the sheet attribute information included in a second print job in response to completion of printing processing based on a first print job allocated to the same sheet loading means as the second print job in the case where said first print job of which sheet attribute information is identical to the sheet attribute information held by said holding means, and said second print job of which sheet attribute information is not identical to the sheet attribute information held by said holding means.

2. The printing apparatus according to Claim 1, wherein said selecting means selects any of the plurality of sheet loading means in response to said second print job being input by said input means.

3. The printing apparatus according to Claim 1 or 2, further comprising:
storing means (209) for storing determination information for determining the sheet loading means selected by said selecting means;
wherein said allocation means allocates sheet loading means by reading out said determination information stored in said storing means in response to said second print job being input by said input means.

4. The printing apparatus according to any of Claims 1 through 3, wherein said printing means starts the print processing of a third print job allocated to another sheet loading means different from the sheet loading means selected by said selecting means in response to completion of the print processing of said first print job, and start the print processing of said second print job following completion of at least the print processing of said third print job.

5. The printing apparatus according to any of Claims 1 through 4, further comprising:
display means adapted to display information;
wherein said output means outputs information relating to said change instruction to said display means.

6. The printing apparatus according to any of Claims 1 through 5, wherein said output means transmits information relating to said change instruction to a notification destination.

7. The printing apparatus according to any of Claims 1 through 6, wherein said sheet attribute information is information relating to the size and/or type of said sheets.

8. The printing apparatus according to any of Claims 1 through 7, wherein said holding unit holds the sheet attribute information included in said print job in a manner correlated with said sheet loading units, in response to a print job being allocated to said sheet loading unit which has not been allocated with said print job in said second allocation processing.

9. The printing apparatus according to any of Claims 1 through 8, further comprising:
accepting means for accepting a setting instruction by an operator of said printing apparatus for setting said sheet attribute information to the sheet loading means selected by said selecting means;
wherein said holding unit holds the sheet attribute information according to said setting instruction accepted by said accepting means in a manner correlated with the sheet loading unit selected by said selecting means.

10. The printing apparatus according to any of Claims 1 through 9, further comprising:
display means (204) for associating information relating to the processing status of a print job allocated to sheet loading means by said allocation means with the sheet loading means to which said print job has been allocated, and displaying this;
wherein said selecting means selects any of the plurality of sheet loading means based on the input instruction input by the operator of said printing apparatus through the display screen of said display means.

11. The printing apparatus according to Claim 10, wherein said display means displays the sheet loading means which have been correlated with a print job, which will be completed first, so as to identify this from the other sheet loading means, in the case where the plurality of sheet loading means are allocated with print jobs.

12. The printing apparatus according to any of Claims 1 through 11, wherein said input means inputs said print job by reading originals.

13. The printing apparatus according to any of Claims 1 through 12, wherein said input means inputs said print job by receiving said print job from an external device.

14. A printing method in a printing apparatus having a holding unit for holding a plurality of sets of sheet attribute information, each of the sets of sheet attribute information relating to the attributes of the sheets loaded in one of the plurality of sheet loading units, comprising:
an input step for inputting a print job;
a print step for performing print processing on sheets based on said print job input in said input step;
a selecting step for selecting any of the plurality of sheet loading units;
an allocation step for allocating said print job to the sheet loading unit of which sheet attribute information is identical to the print job in the case where the sheet attribute information included in said print job is identical to any of a plurality of sheet attribute information held by said holding unit, or allocate said print job to the sheet loading unit selected in said selecting step in the case where the sheet attribute information included in said print job is not identical to any of a plurality of sheet attribute information held by said holding unit; and
an output step for outputting a change instruction for changing the sheets loaded in a particular sheet loading unit with sheets corresponding to the sheet attribute information included in said second print job in response to completion of printing processing based on said first print job in the case where a first print job of which sheet attribute information is identical to the sheet attribute information held by said holding unit, and a second print job of which sheet attribute information is not identical to the sheet attribute information held by said holding unit, are allocated to said particular sheet loading unit.

15. A computer program, which when loaded into a computer and executed performs a printing method as claimed in claim 14.

16. A computer readable storage medium storing a computer program as claimed in claim 15.

## Patentansprüche

1. Druckvorrichtung umfassend:
Eingabemittel (input means) (201, 202) zum Eingeben eines Druckauftrags;
Druckmittel (printing means) (203), konfiguriert zum Ausführen von Druckverarbeitung auf Bögen auf Basis eines vom Eingabemittel eingegeben Druckauftrags;
mehrere Bogenlademittel (sheet loading means) (617, 618, 619 und 620), wobei jedes zum Zuführen von Bögen an das Druckmittel angepasst ist;
Bereithaltungsmittel (holding means) (209) zum Bereithalten mehrerer Sätze Bogenattributinformation, wobei sich jeder Satz auf die Attribute der in einem der mehreren Bogenlademittel geladenen Bögen bezieht;
Auswahlmittel (selecting means) (205), konfiguriert zum Auswählen von einem der mehreren Bogenlademittel;
Zuweisungsmittel (allocation means) (205), konfiguriert zum Zuweisen des Druckauftrags an das Bogenlademittel, dessen Bogenattributinformation mit dem Druckauftrag in dem Fall identisch ist, wo die in dem Druckauftrag eingeschlossene Bogenattributinformation mit einem von mehreren von dem Bereithaltungsmittel bereitgehaltenen Sätzen Bogenattributinformationen identisch ist oder Zuweisen des Druckauftrags an das von dem Auswahlmittel ausgewählte Bogenlademittel in dem Fall, wo die in dem Druckauftrag eingeschlossene Bogenattributinformation mit keinem der mehreren von dem Bereithaltungsmittel bereitgehaltenen Sätze Bogenattributinformationen identisch ist; und
Ausgabemittel (output means) (204) zum Ausgeben eines Tauschbefehls (change instruction) zum Tauschen der in Bogenlademitteln geladenen Bögen, **gekennzeichnet dadurch, dass** das Ausgabemittel einen Tauschbefehl ausgibt zum Tauschen der in einem gewissen Bogenlademittel geladenen Bögen gegen Bögen entsprechend der in einem zweiten Druckauftrag eingeschlossenen Bogenattributinformation in Antwort auf Abschluss der Druckverarbeitung auf Basis eines ersten Druckauftrags, der an dasselbe Bogenlademittel wie der zweite Druckauftrag zugewiesen wurde in dem Fall, wo Bogenattributinformation des ersten Druckauftrags mit der vom Bereithaltungsmittel bereitgehaltenen Bogenattributinformation identisch ist, und Bogenattributinformation des zweiten Druckauftrags nicht mit der vom Bereithaltungsmittel bereitgehaltenen Bogenattributinformation identisch ist.

2. Druckvorrichtung nach Anspruch 1,
wobei das Auswahlmittel eines der mehreren Bogenlademittel in Antwort auf den vom Eingabemittel eingegebenen zweiten Druckauftrag auswählt.

3. Druckvorrichtung nach Anspruch 1 oder 2, weiterhin umfassend:
Speichermittel (storing means) (209) zum Speichern von Bestimminformation zum Bestimmen des vom Auswahlmittel ausgewählten Bogenlademittels;
wobei das Zuweisungsmittel Bogenlademittel durch Auslesen der im Speichermittel gespeicherten Bestimminformation in Antwort auf den vom Eingabemittel eingegebenen zweiten Druckauftrag zuweist.

4. Druckvorrichtung nach einem der Ansprüche 1 bis 3, wobei das Druckmittel die Druckverarbeitung eines dritten Druckauftrags beginnt, der zugewiesen wird an ein anderes Bogenlademittel, das verschieden ist vom vom Auswahlmittel in Antwort auf Abschluss der Druckverarbeitung des ersten Druckauftrags ausgewählten Bogenlademittel, und die Druckverarbeitung des zweiten Druckauftrags nach Abschluss wenigstens der Druckverarbeitung des dritten Druckauftrags beginnt.

5. Druckvorrichtung nach einem der Ansprüche 1 bis 4, weiterhin umfassend:
Anzeigemittel (display means), angepasst zum Anzeigen von Information;
wobei das Ausgabemittel Information bezüglich des Tauschbefehls an das Anzeigemittel ausgibt.

6. Druckvorrichtung nach einem der Ansprüche 1 bis 5, wobei das Ausgabemittel Information bezüglich des Tauschbefehls an ein Benachrichtigungsziel überträgt.

7. Druckvorrichtung nach einem der Ansprüche 1 bis 6, wobei die Bogenattributinformation Information bezüglich der Größe und/oder des Typs der Bögen ist.

8. Druckvorrichtung nach einem der Ansprüche 1 bis 7, wobei das Bereithaltungsmittel die in dem Druckauftrag eingeschlossene Bogenattributinformation auf eine mit den Bogenlademitteln korrelierte Weise bereithält, in Antwort auf einen Druckauftrag, der an das Bogenlademittel zugewiesen wird, das nicht an den Druckauftrag in der zweiten Zuweisungsverarbeitung zugewiesen wurde.

9. Druckvorrichtung nach einem der Ansprüche 1 bis 8, weiterhin umfassend:
Annahmemittel (accepting means) zum Annehmen eines Einstellbefehls von einem Bediener der Druckvorrichtung zum Einstellen der Bogenattributinformation an das vom Auswahlmittel ausgewählte Bogenlademittel;
wobei das Bereithaltungsmittel die Bogenattributinformation gemäß dem vom Annahmemittel angenommenen Einstellbefehl auf eine mit dem vom Auswahlmittel ausgewählten Bogenlademittel korrelierte Weise bereithält.

10. Druckvorrichtung nach einem der Ansprüche 1 bis 9, weiterhin umfassend:
Anzeigemittel (204) zum Assoziieren von Information bezüglich des Verarbeitungsstands eines vom Zuweisungsmittel an Bogenlademittel zugewiesenen Druckauftrags mit dem Bogenlademittel, an welches der Druckauftrag zugewiesen wurde, und um dies anzuzeigen;
wobei das Auswahlmittel eines der mehreren Bogenlademittel auf Basis des vom Bediener der Druckvorrichtung über den Anzeigebildschirm des Anzeigemittels eingegebenen Eingabebefehls auswählt.

11. Druckvorrichtung nach Anspruch 10, wobei das Anzeigemittel das Bogenlademittel anzeigt, das korreliert worden ist mit einem Druckauftrag, der zuerst abgeschlossen werden wird, um dieses unter den anderen Bogenlademitteln zu identifizieren, in dem Fall, wo Druckaufträge den mehreren Bogenlademittel zugewiesen sind.

12. Druckvorrichtung nach einem der Ansprüche 1 bis 11, wobei das Eingabemittel den Druckauftrag durch Lesen von Originalen eingibt.

13. Druckvorrichtung nach einem der Ansprüche 1 bis 12, wobei das Eingabemittel den Druckauftrag durch Empfangen des Druckauftrags von einer externen Einrichtung eingibt.

14. Druckverfahren in einer Druckvorrichtung mit einer Bereithaltungseinheit zum Bereithalten mehrerer Sätze Bogenattributinformation, wobei sich jeder Satz Bogenattributinformationen auf Attribute von in einer von mehreren Bogenladeeinheiten geladenen Bögen bezieht, umfassend:
einen Eingabeschritt zum Eingeben eines Druckauftrags;
einen Druckschritt zum Ausführen von Druckverarbeitung auf Bögen auf Basis eines vom Eingabemittel eingegeben Druckauftrags;
einen Auswahlschritt zum Auswählen von einer der mehreren Bogenladeeinheiten;
einen Zuweisungsschritt zum Zuweisen des Druckauftrags an die Bogenladeeinheit, deren Bogenattributinformation mit dem Druckauftrag in dem Fall identisch ist, wo die in dem Druckauftrag eingeschlossene Bogenattributinformation identisch ist mit einer von mehreren von der Bereithaltungseinheit bereitgehaltenen Bogenattributinformationen identisch ist oder Zuweisen des Druckauftrags an die im Auswahlschritt ausgewählte Bogenladeeinheit in dem Fall, wo die in dem Druckauftrag eingeschlossene Bogenattributinformation mit keiner von mehreren von der Bereithaltungseinheit bereitgehaltenen Bogenattributinformationen identisch ist; und
einen Ausgabeschritt zum Ausgeben eines Tauschbefehls zum Tauschen der in einer gewissen Bogenladeeinheit geladenen Bögen gegen Bögen entsprechend der in einem zweiten Druckauftrag eingeschlossenen Bogenattributinformation, in Antwort auf Abschluss der Druckverarbeitung auf Basis des ersten Druckauftrags in dem Fall, wo der erste Druckauftrag, dessen Bogenattributinformation mit der von der Bereithaltungseinheit bereitgehaltenen Bogenattributinformation identisch ist, und der zweite Druckauftrag, dessen Bogenattributinformation nicht mit der von der Bereithaltungseinheit bereitgehaltenen Bogenattributinformation identisch ist, der gewissen Bogenladeeinheit zugewiesen werden.

15. Computerprogramm, welches, wenn es in einen Computer geladen und ausgeführt wird, ein Druckverfahren nach Anspruch 14 durchführt.

16. Computerlesbares Speichermedium, das ein Computerprogramm nach Anspruch 1 5 speichert.

## Revendications

1. Appareil d'impression comprenant :
un moyen d'entrée (201, 202) pour la fourniture en entrée d'une tâche d'impression ;
un moyen d'impression (203) configuré pour effectuer un traitement d'impression sur des feuilles sur la base d'une tâche d'impression fournie en entrée par le moyen d'entrée ;
une pluralité de moyens de chargement de feuilles (617, 618, 619 et 620), chacun d'entre eux étant apte à fournir des feuilles audit moyen d'impression ;
un moyen de maintien (209) pour maintenir une pluralité d'ensembles d'informations d'attributs de feuilles, chaque ensemble conservant les attributs de feuilles chargées dans l'un de la pluralité de moyens de chargement de feuilles ;
un moyen de sélection (205) configuré pour sélectionner l'un quelconque de la pluralité de moyens de chargement de feuilles ;
un moyen d'allocation (205) configuré pour allouer ladite tâche d'impression au moyen de chargement de feuilles dont les informations d'attributs de feuilles sont identiques à celles de ladite tâche d'impression dans le cas où les informations d'attributs de feuilles contenues dans ladite tâche d'impression sont identiques à l'une quelconque d'une pluralité d'ensembles d'informations d'attributs de feuilles maintenues par ledit moyen de maintien, ou pour allouer ladite tâche d'impression au moyen de chargement de feuilles sélectionné par ledit moyen de sélection dans le cas où les informations d'attributs de feuilles contenues dans ladite tâche d'impression ne sont pas identiques à l'une quelconque d'une pluralité d'ensembles d'informations d'attributs de feuilles maintenues par ledit moyen de maintien ; et
un moyen de sortie (204) pour fournir en sortie une instruction de changement pour remplacer les feuilles chargées dans le moyen de chargement de feuilles, **caractérisé en ce que** ledit moyen de sortie fournit en sortie une instruction de changement pour remplacer les feuilles chargées dans un moyen de chargement de feuilles particulier par des feuilles correspondant aux informations d'attributs de feuilles contenues dans une deuxième tâche d'impression en réponse à l'achèvement du traitement d'impression effectué sur la base d'une première tâche d'impression allouée au même moyen de chargement de feuilles que la deuxième tâche d'impression, dans le cas de ladite première tâche d'impression dont les informations d'attributs de feuilles sont identiques aux informations d'attributs de feuilles maintenues par ledit moyen de maintien, et de la deuxième tâche d'impression dont les informations d'attributs de feuilles ne sont pas identiques aux informations d'attributs de feuilles maintenues par ledit moyen de maintien.

2. Appareil d'impression selon la revendication 1, dans lequel ledit moyen de sélection sélectionne l'un quelconque de la pluralité de moyens de chargement de feuilles en réponse au fait que ladite deuxième tâche d'impression est fournie en entrée par ledit moyen d'entrée.

3. Appareil d'impression selon la revendication 1 ou 2, comprenant en outre :
un moyen de stockage (209) pour stocker des informations de détermination permettant de déterminer le moyen de chargement de feuilles sélectionné par ledit moyen de sélection ;
dans lequel ledit moyen d'allocation alloue un moyen de chargement de feuilles en lisant lesdites informations de détermination stockées dans ledit moyen de stockage en réponse au fait que ladite deuxième tâche d'impression est fournie en entrée par ledit moyen d'entrée.

4. Appareil d'impression selon l'une quelconque des revendications 1 à 3, dans lequel ledit moyen d'impression commence le traitement d'impression d'une troisième tâche d'impression allouée à un autre moyen de chargement de feuilles différent du moyen de chargement de feuilles sélectionné par ledit moyen de sélection en réponse à l'achèvement du traitement d'impression de ladite première tâche d'impression, et commence le traitement d'impression de ladite deuxième tâche d'impression après l'achèvement d'au moins le traitement d'impression de ladite troisième tâche d'impression.

5. Appareil d'impression selon l'une quelconque des revendications 1 à 4, comprenant en outre :
un moyen d'affichage apte à afficher des informations ;
dans lequel ledit moyen de sortie fournit en sortie des informations concernant ladite instruction de modification audit moyen d'affichage.

6. Appareil d'impression selon l'une quelconque des revendications 1 à 5, dans lequel ledit moyen de sortie transmet des informations concernant ladite instruction de modification à une destination de notification.

7. Appareil d'impression selon l'une quelconque des revendications 1 à 6, dans lequel lesdites informations d'attributs de feuilles sont des informations concernant la taille et/ou le type desdites feuilles.

8. Appareil d'impression selon l'une quelconque des revendications 1 à 7, dans lequel ladite unité de maintien maintient les informations d'attributs de feuilles contenues dans ladite tâche d'impression d'une manière qui est corrélée avec lesdites unités de chargement de feuilles, en réponse au fait qu'une tâche d'impression est allouée à ladite unité de chargement de feuilles à laquelle n'a pas été allouée ladite tâche d'impression lors dudit deuxième traitement d'allocation.

9. Appareil d'impression selon l'une quelconque des revendications 1 à 8, comprenant en outre :
un moyen d'acceptation pour accepter une instruction de réglage fournie par un opérateur dudit appareil d'impression pour régler lesdites informations d'attributs de feuilles dans le moyen de chargement de feuilles sélectionné par ledit moyen de sélection ;
dans lequel ladite unité de maintien maintient les informations d'attributs de feuilles en conformité avec ladite instruction de réglage acceptée par ledit moyen d'acceptation d'une manière qui est corrélée avec l'unité de chargement de feuilles sélectionnée par ledit moyen de sélection.

10. Appareil d'impression selon l'une quelconque des revendications 1 à 9, comprenant en outre :
un moyen d'affichage (204) pour associer des informations liées à l'état de traitement d'une tâche d'impression allouée à des moyens de chargement de feuilles par ledit moyen d'allocation, au moyen de chargement de feuilles auquel ladite tâche d'impression a été allouée, et pour afficher ce fait ;
dans lequel ledit moyen de sélection sélectionne l'un quelconque de la pluralité de moyens de chargement de feuilles sur la base de l'instruction d'entrée fournie en entrée par l'opérateur dudit appareil d'impression par l'intermédiaire de l'écran d'affichage dudit moyen d'affichage.

11. Appareil d'impression selon la revendication 10, dans lequel ledit moyen d'affichage affiche le moyen de chargement de feuilles qui a été corrélé avec une tâche d'impression qui s'achèvera en premier, afin d'identifier celui-ci par rapport aux autres moyens de chargement de feuilles, dans le cas où des tâches d'impression sont allouées à la pluralité de moyens de chargement de feuilles.

12. Appareil d'impression selon l'une quelconque des revendications 1 à 11, dans lequel ledit moyen d'entrée fournit en entrée ladite tâche d'impression en lisant des originaux.

13. Appareil d'impression selon l'une quelconque des revendications 1 à 12, dans lequel ledit moyen d'entrée fournit en entrée ladite tâche d'impression en recevant ladite tâche d'impression d'un dispositif externe.

14. Procédé d'impression dans un appareil d'impression comportant une unité de maintien pour maintenir une pluralité d'ensembles d'informations d'attributs de feuilles, chacun des ensembles d'informations d'attributs de feuilles concernant les attributs des feuilles chargées dans l'une de la pluralité d'unités de chargement de feuilles, comprenant :
une étape d'entrée pour fournir en entrée une tâche d'impression ;
une étape d'impression pour effectuer un traitement d'impression sur des feuilles sur la base de ladite tâche d'impression fournie en entrée lors de ladite étape d'entrée ;
une étape de sélection pour sélectionner l'une quelconque de la pluralité d'unités de chargement de feuilles ;
une étape d'allocation pour allouer ladite tâche d'impression à l'unité de chargement de feuilles dont les informations d'attributs de feuilles sont identiques à celles de la tâche d'impression dans le cas où les informations d'attributs de feuilles contenues dans ladite tâche d'impression sont identiques à l'une quelconque de la pluralité d'informations d'attributs de feuilles maintenues par ladite unité de maintien, ou pour allouer ladite tâche d'impression à ladite unité de chargement de feuilles sélectionnée lors de ladite étape de sélection dans le cas où les informations d'attributs de feuilles contenues dans ladite tâche d'impression ne sont pas identiques à l'une quelconque d'une pluralité d'informations d'attributs de feuilles maintenues par ladite unité de maintien ; et
une étape de sortie pour fournir en sortie une instruction de changement pour remplacer les feuilles chargées dans une unité de chargement de feuilles particulière par des feuilles correspondant aux informations d'attributs de feuilles contenues dans ladite deuxième tâche d'impression en réponse à l'achèvement du traitement d'impression effectué sur la base de ladite première tâche d'impression dans le cas où une première tâche d'impression dont les informations d'attributs de feuilles sont identiques aux informations d'attributs de feuilles maintenues par ladite unité de maintien, et où une deuxième tâche d'impression dont les informations d'attributs de feuilles ne sont pas identiques aux informations d'attributs de feuilles maintenues par ladite unité de maintien, sont allouées à ladite unité de chargement de feuilles particulière.

15. Programme informatique qui, lorsqu'il est chargé dans un ordinateur et est exécuté, met en oeuvre un procédé d'impression selon la revendication 14.

16. Support de stockage lisible par ordinateur stockant un programme informatique selon la revendication 15.
